# EUROPEAN PATENT APPLICATION

(11) **EP 4 046 965 A1**
(43) Date of publication of application: **24.08.2022**
(21) Application number: 22157834.7
(22) Date of filing: 21.02.2022
(51) Int. Cl.: C01G 30/00, C01G 33/00, C01G 35/00, C04B 35/495, H01M 4/04, H01M 4/131, H01M 4/1391, H01M 4/36, H01M 4/62

(54) **PRECURSOR SOLUTION, PRECURSOR POWDER, ELECTRODE MANUFACTURING METHOD, AND ELECTRODE**

(30) Priority: 22.02.2021 JP 2021026405
(71) Applicant: Seiko Epson Corporation, Tokyo 160-8801 (JP)
(72) Inventor: TAKIGUCHI, Hiroshi, Suwa-shi, 392-8502 (JP); YAMAMOTO, Hitoshi, Suwa-shi, 392-8502 (JP); TERAOKA, Tsutomu, Suwa-shi, 392-8502 (JP); FUJISHIMA, Kenryu, Suwa-shi, 392-8502 (JP)
(74) Representative: Miller Sturt Kenyon

(57) **Abstract**

A precursor solution according to the present disclosure contains: an organic solvent; a lithium oxoacid salt that exhibits a solubility in the organic solvent; and a base metal compound that exhibits a solubility in the organic solvent and that is at least one base metal selected from the group consisting of Nb, Ta, and Sb.

## Description

The present application is based on, and claims priority from JP Application Serial Number 2021-026405, filed February 22, 2021, the disclosure of which is hereby incorporated by reference herein in its entirety.

### BACKGROUND

### 1. Technical Field

The present disclosure relates to a precursor solution, a precursor powder, an electrode manufacturing method, and an electrode.

### 2. Related Art

A high-speed charge (charge at a high C-rate), a high output, and an improvement in cycle characteristics are required in secondary batteries.

In particular, lithium ion secondary batteries have characteristics such as a high energy density, excellent charge and discharge efficiency, a long service life, high-speed charge and discharge capability, large current discharge capability, and high versatility, and are thus more advantageous than other secondary batteries.

In the related art, there has been a problem in secondary batteries, in particular, in lithium ion secondary batteries, that a by-product is generated on a surface of an active material constituting an electrode during charge and discharge, and ions are eluted from an active material side, thereby adversely influencing characteristics such as high-speed charge and discharge and cycle characteristics.

As a technique for solving such a problem, for example, JP-A-2019-179758 discloses that a film of a magnesium-containing oxide is provided, by using an aqueous sol-gel method, on a surface of a lithium cobalt oxide, which is a positive electrode active material. JP-A-2017-103024 discloses that a film of an Al-containing oxide is provided on a surface of a lithium cobalt oxide, which is a positive electrode active material.

It is required to enable charge and discharge at a higher speed in the future, but in the related art, it is difficult to sufficiently densely and uniformly form a film of an oxide on a surface of an active material, and thus it is difficult to meet the above requirement.

### SUMMARY

The present disclosure has been made to solve the above-mentioned problem, and can be implemented as following application examples.

A precursor solution according to an application example of the present disclosure contains: an organic solvent; a lithium oxoacid salt that exhibits a solubility in the organic solvent; and a base metal compound that exhibits a solubility in the organic solvent and that is at least one base metal selected from the group consisting of Nb, Ta, and Sb.

In a precursor solution according to another application example of the present disclosure, when a ratio of a content of the base metal to a content of lithium in when a stoichiometric composition of the following composition formula (1) is satisfied is used as a reference, the content of lithium in the precursor solution is 0.90 times or more and 1.20 times or less the reference

LiMtO₃ (1)

(Mt in the formula (1) is at least one selected from the group consisting of Nb, Ta, and Sb).

In a precursor solution according to another application example of the present disclosure, the base metal compound is at least one of an oxoacid compound of the base metal, an acetylacetonate of the base metal, and an alkoxide of the base metal.

In a precursor solution according to another application example of the present disclosure, an amount of water in the precursor solution is 300 ppm or less.

In addition, in a precursor solution according to another application example of the present disclosure, the lithium oxoacid salt is lithium nitrate.

In a precursor solution according to another application example of the present disclosure, the organic solvent is nonaqueous, and is one or two or more selected from the group consisting of n-butyl alcohol, ethylene glycol monobutyl ether, butyl lactate, ethyl lactate, butylene glycol, hexylene glycol, pentanediol, hexanediol, heptanediol, toluene, ortho-xylene, paraxylene, hexane, heptane, and octane.

A precursor powder according to another application example of the present disclosure contains a plurality of precursor particles, which are made of a material containing an inorganic substance that contains Li, at least one base metal selected from the group consisting of Nb, Ta, and Sb, and an oxoacid ion, and an average particle diameter is 500 nm or less.

A precursor powder according to another application example of the present disclosure contains a plurality of precursor particles obtained by subjecting the precursor solution according to the application example of the present disclosure to a heat treatment.

A precursor powder according to another application example of the present disclosure has an average particle diameter of 500 nm or less.

An electrode manufacturing method according to an application example of the present disclosure includes: an organic solvent removing step of removing the organic solvent by heating the precursor solution according to the application example of the present disclosure; a molding step of molding a composition containing a plurality of precursor particles obtained in the organic solvent removing step to obtain a molded article; and a firing step of firing the molded article, in which the composition to be subjected to the molding step contains active material particles.

An electrode manufacturing method according to another application example of the present disclosure further includes, between the organic solvent removing step and the molding step, an organic substance removing step of removing an organic substance contained in the composition obtained by removing the organic solvent from the precursor solution.

In an electrode manufacturing method according to another application example of the present disclosure, the composition to be subjected to the molding step contains the active material particles in addition to the precursor particles.

In an electrode manufacturing method according to another application example of the present disclosure, a denseness of the active material particles in the electrode obtained in the firing step is 60% or more.

An electrode according to another application example of the present disclosure is manufactured by the electrode manufacturing method according to the application example of the present disclosure.

### BRIEF DESCRIPTION OF THE DRAWINGS

FIG. 1 is a schematic perspective view schematically showing a configuration of a lithium ion secondary battery according to a first embodiment.
FIG. 2 is a schematic cross-sectional view schematically showing a structure of the lithium ion secondary battery according to the first embodiment.
FIG. 3 is a schematic perspective view schematically showing a configuration of a lithium ion secondary battery according to a second embodiment.
FIG. 4 is a schematic cross-sectional view schematically showing a structure of the lithium ion secondary battery according to the second embodiment.
FIG. 5 is a schematic perspective view schematically showing a configuration of a lithium ion secondary battery according to a third embodiment.
FIG. 6 is a schematic cross-sectional view schematically showing a structure of the lithium ion secondary battery according to the third embodiment.

### DESCRIPTION OF EXEMPLARY EMBODIMENTS

Hereinafter, preferred embodiments of the present disclosure will be described in detail.

### 1 Precursor Solution

A precursor solution according to the present disclosure will be described.

The precursor solution according to the present disclosure is used to form a material for coating a surface of particles of an active material such as a positive electrode active material or a negative electrode active material in an electrode of a secondary battery, that is, a precursor solution of a material for coating an active material.

The precursor solution according to the present disclosure contains an organic solvent, a lithium oxoacid salt that exhibits a solubility in the organic solvent, and a base metal compound that exhibits a solubility in the organic solvent and that is at least one base metal selected from the group consisting of Nb, Ta, and Sb. Hereinafter, at least one base metal selected from the group consisting of Nb, Ta, and Sb may be referred to as "Mt", and a base metal compound containing Mt may be referred to as an "Mt compound".

With the above configuration, in an electrode manufactured by using the precursor solution, the surface of the active material particles can be suitably coated with a coating material made of a lithium salt of a metal acid of Mt, specifically, the surface of the active material particles can be suitably prevented from forming an unintended gap by the coating material made of the lithium salt of the metal acid of Mt, and thus can be densely and uniformly coated with high adhesion. In particular, since the precursor solution according to the present disclosure contains the lithium oxoacid salt, a melting point of a solid content obtained by removing the organic solvent from the precursor solution can be lowered, and a reaction with the Mt compound can be promoted. Accordingly, with a firing treatment which is a heat treatment at a low temperature for a short period of time, crystal growth can be promoted, and the lithium oxoacid salt can be converted to the lithium salt of the metal acid of Mt, which is excellent in adhesion to the surface of the active material particles, denseness, uniformity, and the like. As a result, in the case of application to the active material particles, an effect of coating the surface of the active material particles with the lithium salt of the metal acid of Mt can be remarkably exerted, and the active material particles can be suitably used to manufacture a secondary battery that is excellent in charge and discharge characteristics, for example, charge and discharge characteristics at a high load.

In the present disclosure, the expression "exhibits a solubility" indicates a sufficiently high solubility, and specifically indicates that the solubility in the solvent at 25°C is 10 g/100 g or more.

In contrast, when the above conditions are not satisfied, no satisfactory result can be obtained.

For example, when water is used instead of the organic solvent, an element constituting the active material particles is dissolved in water, or the surface of the active material particles is hydroxylated and is thus deteriorated, so that no desired active material coated with the lithium salt of the metal acid of Mt can be obtained.

In addition, even when the organic solvent is contained, in a case in which the organic solvent does not dissolve at least one of the lithium oxoacid salt and the base metal compound in the precursor solution, only an active material that is unevenly coated with coarse crystals of lithium carbonate or coarse crystals of an Mt oxide not containing Li is obtained, and the charge and discharge characteristics, for example, the charge and discharge characteristics at a high load are poor.

Further, when the lithium oxoacid salt is not contained, a coating layer formed on the surface of the active material particles contains coarse crystals of an Mt oxide not containing Li, and the above effects cannot be sufficiently exerted. An unintended gap is likely to occur between the active material particles and the coating layer, it is difficult to bring the active material particles into close contact with the coating layer with high adhesion, and the denseness and uniformity of the coating layer are also reduced.

When the Mt compound is not contained, the coating layer formed on the surface of the active material particles is a lithium carbonate layer, and the charge and discharge characteristics, for example, the charge and discharge characteristics at a high load are poor.

### 1-1 Organic Solvent

The precursor solution according to the present disclosure contains an organic solvent.

The organic solvent may be any solvent that exhibits a function of dissolving the lithium oxoacid salt and the Mt compound, which will be described in detail later, in the precursor solution according to the present disclosure. Examples of the organic solvent include alcohols, glycols, ketones, esters, ethers, organic acids, aromatics, amides, and aliphatic hydrocarbons. Further, the organic solvent may be a mixed solvent which is a combination of one or two or more selected from the above. Examples of the alcohols include methyl alcohol, ethyl alcohol, n-propyl alcohol, isopropyl alcohol, n-butyl alcohol, allyl alcohol, and 2-n-butoxyethanol. Examples of the glycols include ethylene glycol, propylene glycol, butylene glycol, hexylene glycol, pentanediol, hexanediol, heptanediol, and dipropylene glycol. Examples of the ketones include dimethyl ketone, diisobutyl ketone, methyl ethyl ketone, methyl propyl ketone, and methyl isobutyl ketone. Examples of the esters include methyl formate, ethyl formate, methyl acetate, and methyl acetoacetate. Examples of the ethers include diethylene glycol monomethyl ether, diethylene glycol monoethyl ether, diethylene glycol dimethyl ether, ethylene glycol monomethyl ether, ethylene glycol monoethyl ether, ethylene glycol monobutyl ether, and dipropylene glycol monomethyl ether. Examples of the organic acids include formic acid, acetic acid, 2-ethylbutyric acid, and propionic acid. Examples of the aromatics include toluene, ortho-xylene, and paraxylene. Examples of the amides include formamide, N,N-dimethylformamide, N,N-diethylformamide, dimethylacetamide, and N-methylpyrrolidone. Examples of the aliphatic hydrocarbons include hexane, heptane, and octane.

Among these, the organic solvent constituting the precursor solution according to the present disclosure is nonaqueous, and is preferably one or two or more selected from the group consisting of n-butyl alcohol, ethylene glycol monobutyl ether, ethyl lactate, butyl lactate, butylene glycol, hexylene glycol, pentanediol, hexanediol, heptanediol, toluene, ortho-xylene, paraxylene, hexane, heptane, and octane.

Accordingly, the solubility of the lithium oxoacid salt and the Mt compound, which will be described in detail later, can be made excellent. In addition, it is possible to effectively prevent the organic solvent from unintentionally remaining in the electrode and the secondary battery manufactured by using the precursor solution according to the present disclosure.

When the organic solvent constituting the precursor solution according to the present disclosure contains components constituting the above group, the organic solvent may further contain a solvent component not constituting the above group, and a ratio of the components constituting the above group to the entire organic solvent constituting the precursor solution according to the present disclosure is preferably 60 mass% or more, more preferably 80 mass% or more, and still more preferably 90 mass% or more.

Accordingly, the above-described effects are remarkably exerted.

A content of the organic solvent in the precursor solution according to the present disclosure is preferably 60 mass% or more and 99.7 mass% or less, and more preferably 80 mass% or more and 99.7 mass% or less.

### 1-2 Lithium Oxoacid Salt

The precursor solution according to the present disclosure contains a lithium oxoacid salt.

Such a lithium oxoacid salt may be any salt that exhibits a solubility in the organic solvent constituting the precursor solution.

Examples of an oxoanion constituting the lithium oxoacid salt include a halogen oxoacid ion, a borate ion, a carbonate ion, an orthocarbonate ion, a carboxylate ion such as an acetate ion, a silicate ion, a nitrite ion, a nitrate ion, a phosphite ion, a phosphate ion, an arsenate ion, a sulfite ion, a sulfate ion, a sulfonate ion, and a sulfinate ion. Examples of the halogen oxoacid ion include a hypochlorite ion, a chlorite ion, a chlorate ion, a perchlorate ion, a hypobromite ion, a bromite ion, a bromate ion, a perbromate ion, a hypoiodite ion, an iodite ion, an iodate ion, and a periodate ion.

Further, the lithium oxoacid salt may be a double salt.

Among these, the lithium oxoacid salt is preferably lithium nitrate.

Accordingly, the solubility in the organic solvent can be made excellent, the above-described effect of lowering the melting point of the solid content obtained by removing the organic solvent from the precursor solution can be remarkably exerted, the lithium oxoacid salt can be suitably converted to the lithium salt of the metal acid of Mt, which is particularly excellent in adhesion to the surface of the active material particles, denseness, uniformity, and the like, and the charge and discharge characteristics of the finally obtained secondary battery can be made excellent.

Further, when the lithium oxoacid salt constituting the precursor solution according to the present disclosure contains lithium nitrate, the lithium oxoacid salt may contain a lithium oxoacid salt other than lithium nitrate, and a ratio of lithium nitrate to the entire lithium oxoacid salt constituting the precursor solution according to the present disclosure is preferably 60 mass% or more, more preferably 80 mass% or more, and still more preferably 90 mass% or more.

Accordingly, the above-described effects are remarkably exerted.

A content of the lithium oxoacid salt in the precursor solution according to the present disclosure is preferably 0.04 mass% or more and 10.0 mass% or less, and more preferably 0.1 mass% or more and 7.0 mass% or less.

When a ratio between a content of Mt and a content of lithium in a case in which a stoichiometric composition of the following composition formula (1) is satisfied is used as a reference, the content of lithium in the precursor solution is preferably 0.90 times or more and 1.20 times or less, more preferably 0.95 times or more and 1.17 times or less, and still more preferably 1.00 time or more and 1.15 times or less with respect to the reference.

LiMtO₃ (1)

Accordingly, the coating material made of the material containing the lithium salt of the metal acid of Mt obtained from the precursor solution can have a suitable composition, and the above-described effects can be remarkably exerted.

### 1-3 Mt Compound

The precursor solution according to the present disclosure contains an Mt compound, that is, a base metal compound that is at least one base metal selected from the group consisting of Nb, Ta, and Sb.

Such an Mt compound may be any compound that exhibits a solubility in the organic solvent constituting the precursor solution. Examples of the Mt compound include niobium acetylacetonate compounds such as niobium acetylacetonate; metal salt compounds, for example, niobium oxoacid compounds such as niobium sulfate, niobium halides such as niobium chloride, niobium bromide, niobium iodide, and niobium fluoride, niobium oxychloride, and niobium oxalate; niobium alkoxides such as niobium penta-secondary butoxide, niobium penta-methoxide, niobium penta-ethoxide, niobium penta-n-propoxide, niobium penta-isopropoxide, niobium penta-n-butoxide, niobium penta-isobutoxide, and niobium penta-tertiary butoxide; tantalum acetylacetonate compounds such as tantalum acetylacetonate; metal salt compounds, for example, tantalum oxoacid compounds such as tantalum nitrate, tantalum orthophosphate, and tantalum sulfate, and tantalum halides such as tantalum chloride, tantalum bromide, tantalum iodide, and tantalum fluoride; tantalum alkoxides such as tantalum penta-secondary butoxide, tantalum penta-methoxide, tantalum penta-ethoxide, tantalum penta-n-propoxide, tantalum penta-isopropoxide, tantalum penta-n-butoxide, tantalum penta-isobutoxide, and tantalum penta-tertiary butoxide; antimony acetylacetonate compounds such as antimony acetylacetonate; metal salt compounds, for example, antimony oxoacid compounds such as antimony orthophosphate and antimony sulfate, and antimony halides such as antimony chloride, antimony bromide, antimony iodide, and antimony fluoride; and antimony alkoxides such as antimony secondary butoxide, antimony trimethoxide, antimony triethoxide, antimony tri-n-propoxide, antimony triisopropoxide, antimony tri-n-butoxide, antimony triisobutoxide, and antimony tri-tertiary butoxide. The Mt compound may be a combination of one or two or more selected from the above.

When the Mt compound is a metal salt compound, the metal salt compound may be a double salt containing Mt.

In particular, the Mt compound is preferably at least one of an oxoacid compound of Mt, an acetylacetonate of Mt, and an alkoxide of Mt, and more preferably at least one of tantalum nitrate, tantalum tetraethoxyacetylacetonate, niobium penta-ethoxide, niobium penta-n-butoxide, tantalum penta-ethoxide, and antimony tri-n-butoxide.

Accordingly, the solubility in the organic solvent can be made excellent, the lithium oxoacid salt can be suitably converted to the lithium salt of the metal acid of Mt, which is particularly excellent in adhesion to the surface of the active material particles, denseness, uniformity, and the like, and the charge and discharge characteristics of the finally obtained secondary battery can be made excellent.

A content of the Mt compound in the precursor solution according to the present disclosure is preferably 0.20 mass% or more and 45 mass% or less, and more preferably 0.25 mass% or more and 35 mass% or less.

### 1-4 Active material particles

The precursor solution according to the present disclosure contains the above-described organic solvent, lithium oxoacid salt, and Mt compound, and may further contain a particle of an active material such as a positive electrode active material and a negative electrode active material, that is, active material particles.

Even when the precursor solution according to the present disclosure does not contain the active material particles, in an electrode manufacturing method described later, an electrode containing the active material particles can be suitably formed by mixing the precursor solution according to the present disclosure and the active material particles, or by mixing the active material particles and a composition, as an intermediate product, obtained by subjecting the precursor solution according to the present disclosure to a treatment in steps described below.

Examples of the positive electrode active material include a lithium multiple oxide containing at least Li and one or more elements selected from the group consisting of V, Cr, Mn, Fe, Co, Ni, and Cu. Examples of such a multiple oxide include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. Further, examples of the positive electrode active material include fluorides such as LiFeF₃, boride complex compounds such as LiBH₄ and Li₄BN₃H₁₀, iodine complex compounds such as a polyvinylpyridine-iodine complex, and non-metal compounds such as sulfur.

Examples of the negative electrode active material include Nb₂O₅, V₂O₅, TiO₂, ln₂O₃, ZnO, SnO₂, NiO, ITO, AZO, GZO, ATO, FTO, and lithium multiple oxides such as Li₄Ti₅O₁₂ and Li₂Ti₃O₇. In addition, examples thereof include metals and alloys such as Li, Al, Si, Si-Mn, Si-Co, Si-Ni, Sn, Zn, Sb, Bi, In, and Au, a carbon material, and a material in which a lithium ion is inserted between layers of a carbon material, such as LiC₂₄ and LiC₆.

An average particle diameter of the active material particles is preferably 1.0 µm or more and 30 µm or less, more preferably 2.0 µm or more and 25 µm or less, and still more preferably 3.0 µm or more and 20 µm or less.

Accordingly, fluidity and ease of handling of the active material particles can be further improved. Further, the adhesion between the coating material made of the lithium salt of the metal acid of Mt and the active material particles can be made excellent, and a ratio of the active material particles and the lithium salt of the metal acid of Mt in the finally formed electrode can be easily adjusted to a suitable range. As a result, the charge and discharge characteristics of the finally obtained secondary battery can be made particularly excellent.

In the present description, the average particle diameter indicates an average particle diameter on a volume basis, and can be determined by, for example, adding a sample to methanol and measuring a dispersion liquid, which is dispersed with an ultrasonic disperser for 3 minutes, with a Coulter counter particle size distribution measuring device (TA-II type manufactured by COULTER ELECTRONICS INS) using an aperture of 50 µm.

When the precursor solution according to the present disclosure contains the active material particles, a content of the active material particles in the precursor solution according to the present disclosure is preferably 33 mass% or more and 90 mass% or less, and more preferably 50 mass% or more and 90 mass% or less.

### 1-5 Others

The precursor solution according to the present disclosure may contain components other than those described above. Hereinafter, such components are also referred to as "other components".

Examples of the other components contained in the precursor solution according to the present disclosure include a conductive additive, and a surfactant such as Triton X-100 and lithium dodecyl sulfate.

A content of the other components in the precursor solution according to the present disclosure is not particularly limited, and is preferably 10 mass% or less, more preferably 5.0 mass% or less, and still more preferably 0.5 mass% or less.

The precursor solution according to the present disclosure may contain a plurality of kinds of components as the other components. In this case, a sum of contents of the other components is adopted as the value of the content of the other components in the precursor solution according to the present disclosure.

An amount of water in the precursor solution according to the present disclosure is preferably 300 ppm or less, more preferably 100 ppm or less, and still more preferably 50 ppm or less.

Accordingly, service life of the precursor solution becomes longer, and a coating film of higher quality can be formed.

As described above, in the electrode of the secondary battery, the precursor solution according to the present disclosure may be any solution that is used to form a material for coating the surface of the active material particles such as a positive electrode active material and a negative electrode active material, in particular, the coating material made of the lithium salt of the metal acid of Mt, and is preferably a precursor solution used for forming a material for coating the surface of the positive electrode active material particles, that is, a precursor solution of a material for coating a positive electrode active material.

Accordingly, the lithium oxoacid salt can be suitably converted into the lithium salt of the metal acid of Mt, which is particularly excellent in adhesion to the surface of the active material particles, denseness, uniformity, and the like, and the charge and discharge characteristics of the finally obtained secondary battery can be made excellent.

The precursor solution according to the present disclosure can be suitably prepared by mixing the above-described components.

### 2 Precursor Powder

Next, a precursor powder according to the present disclosure will be described.

The precursor powder according to the present disclosure contains a plurality of particles obtained by subjecting the above-described precursor solution according to the present disclosure to a heat treatment, that is, a plurality of precursor particles. Such precursor particles contain a precursor of the lithium salt of the metal acid of Mt, and particularly contain an inorganic substance containing an oxoacid ion.

Accordingly, in an electrode manufactured by using the precursor powder, the surface of the active material particles can be suitably coated with the coating material made of the lithium salt of the metal acid of Mt, specifically, the surface of the active material particles can be suitably prevented from forming an unintended gap by the coating material made of the lithium salt of the metal acid of Mt, and can be densely and uniformly coated with high adhesion. In particular, a melting point of the precursor powder can be lowered by containing the oxoacid ion. Accordingly, with a firing treatment which is a heat treatment at a low temperature for a short period of time, crystal growth can be promoted, and the lithium oxoacid salt can be converted to the lithium salt of the metal acid of Mt, which is excellent in adhesion to the surface of the active material particles, denseness, uniformity, and the like. As a result, in the case of application to the active material particles, the effect of coating the surface of the active material particles with the lithium salt of the metal acid of Mt can be remarkably exerted, and the active material particles can be suitably used to manufacture the secondary battery excellent in charge and discharge characteristics, for example, charge and discharge characteristics at a high load.

Specifically, the precursor powder according to the present disclosure can be obtained by the heat treatment in a step before a firing step of an electrode manufacturing method, which will be described in detail later.

In addition, the precursor powder according to the present disclosure contains a plurality of precursor particles. The plurality of precursor particles are made of a material containing an inorganic substance that contains Li, at least one base metal selected from the group consisting of Nb, Ta, and Sb, and an oxoacid ion, that is, the precursor of the lithium salt of the metal acid of Mt. An average particle diameter, in particular, an average particle diameter of precursor particles not containing the active material particles is 500 nm or less.

Accordingly, in the electrode manufactured by using the precursor powder, the surface of the active material particles can be suitably coated with the coating material made of the lithium salt of the metal acid of Mt, specifically, the surface of the active material particles can be suitably prevented from forming an unintended gap by the coating material made of the lithium salt of the metal acid of Mt, and can be densely and uniformly coated with high adhesion. In particular, the melting point of the precursor powder can be lowered by containing the oxoacid ion. Accordingly, with a firing treatment which is a heat treatment at a low temperature for a short period of time, crystal growth can be promoted, and the lithium oxoacid salt can be converted to the lithium salt of the metal acid of Mt, which is excellent in adhesion to the surface of the active material particles, denseness, uniformity, and the like. As a result, in the application to the active material particles, the effect of coating the surface of the active material particles with the lithium salt of the metal acid of Mt can be remarkably exerted, and the active material particles can be suitably used to manufacture the secondary battery excellent in charge and discharge characteristics, for example, charge and discharge characteristics at a high load.

The average particle diameter of the precursor particles constituting the precursor powder according to the present disclosure, in particular, the average particle diameter of the precursor particles not containing the active material particles is preferably 500 nm or less, more preferably 2 nm or more and 500 nm or less, and still more preferably 4 nm or more and 300 nm or less.

Accordingly, a melting temperature of the precursor particles can be effectively lowered by the Gibbs-Thomson effect, which is a melting point lowering phenomenon associated with an increase in surface energy.

The precursor particles preferably substantially contain only a single crystal phase.

Accordingly, since crystal phase transition that occurs when an electrode is manufactured by using the precursor powder according to the present disclosure substantially occurs once, generation of an impurity crystal due to segregation or thermal decomposition of elements accompanying the crystal phase transition is reduced, and various characteristics of the manufactured electrode are further improved.

When the precursor powder according to the present disclosure is measured by TG-DTA at a temperature increase rate of 10°C/min, in a case in which only one exothermic peak is observed in a range of 300°C or higher and 1000°C or lower, it can be determined that the precursor powder "substantially contains a single crystal phase".

The crystal particle diameter of the oxide, which is the precursor of the lithium salt of the metal acid of Mt, is not particularly limited, and is preferably 10 nm or more and 200 nm or less, more preferably 15 nm or more and 180 nm or less, and still more preferably 20 nm or more and 160 nm or less.

The precursor powder according to the present disclosure may contain, for example, precursor particles substantially containing only the precursor of the lithium salt of the metal acid of Mt, that is, particles substantially containing a single crystal phase, and active material particles, or may contain precursor particles in which a coating layer substantially containing only the precursor of the lithium salt of the metal acid of Mt is provided on the surface of the active material particles, or may be a mixture of these particles.

When the precursor powder according to the present disclosure contains active material particles, the active material particles preferably satisfy the conditions described in 1-4.

When the precursor particles contain the active material particles, at least a part of the surface of the active material particles is coated with the material containing the precursor of the lithium salt of the metal acid of Mt. In other words, in such a case, the precursor particles contain the active material particles and the coating layer with which at least a part of the surface of the active material particles is coated and which is made of the material containing the precursor of the lithium salt of the metal acid of Mt. In such precursor particles, an average thickness of the coating layer that is made of the material containing the precursor of the lithium salt of the metal acid of Mt is preferably 2 nm or more and 300 nm or less, more preferably 3 nm or more and 150 nm or less, and still more preferably 4 nm or more and 80 nm or less.

Accordingly, the above-described effects can be remarkably exerted, and charge and discharge performance of a lithium ion secondary battery in which the precursor powder is used, for example, charge and discharge performance at a high load can be made excellent.

In the present description, the average thickness of the coating layer refers to the thickness of the coating layer calculated according to a mass of the active material particles and a mass of the precursor of the lithium salt of the metal acid of Mt contained in the entire precursor powder, and according to a specific gravity assuming that the active material particles have a true spherical shape having the same diameter as the average particle diameter and that the coating layer having a uniform thickness is formed on an entire outer surface of the active material particles.

In addition, preferably 0.0005 ≤ T/D ≤ 0.0200, more preferably 0.0005 ≤ T/D ≤ 0.0050, and still more preferably 0.0007 ≤ T/D ≤ 0.0020, in which the average particle diameter of the active material particles is D [µm] and the average thickness of the coating layer made of the material containing the precursor of the lithium salt of the metal acid of Mt is T [µm].

Accordingly, the above-described effects can be remarkably exerted, and the charge and discharge performance of the lithium ion secondary battery in which the precursor powder is used, for example, the charge and discharge performance at a high load can be made excellent.

When the precursor particles contain the active material particles and the coating layer made of the material containing the precursor of the lithium salt of the metal acid of Mt, the coating layer may be any layer with which at least a part of the surface of the active material particles is coated, and preferably satisfies the following conditions. That is, a coating ratio of the coating layer with respect to the outer surface of the active material particles, that is, a ratio of an area of a coating portion of the coating layer with respect to an entire area of the outer surface of the active material particles is preferably 2% or more, more preferably 5% or more, and still more preferably 10% or more. Further, an upper limit of the coating ratio may be 100% or less than 100%.

Accordingly, the above-described effects can be remarkably exerted, and the charge and discharge performance of the lithium ion secondary battery in which the precursor powder is used, for example, the charge and discharge performance at a high load can be made excellent.

A content of the oxoacid ion in the precursor of the lithium salt of the metal acid of Mt constituting the precursor powder according to the present disclosure is not particularly limited, and is preferably 0.1 mass% or more and 30 mass% or less, and more preferably 0.1 mass% or more and 20 mass% or less.

Accordingly, the above-described effects are remarkably exerted.

The precursor powder according to the present disclosure may contain a component other than the precursor of the lithium salt of the metal acid of Mt and the active material particles, and the content of such a component is preferably 10 mass% or less, more preferably 5.0 mass% or less, and still more preferably 0.5 mass% or less.

### 3 Electrode Manufacturing Method

The electrode manufacturing method according to the present disclosure includes an organic solvent removing step of removing the organic solvent by heating the above-described precursor solution according to the present disclosure, a molding step of molding a composition containing a plurality of precursor particles obtained in the organic solvent removing step to obtain a molded article, and a firing step of firing the molded article. The composition to be subjected to the molding step contains active material particles.

Accordingly, it is possible to provide an electrode that can be suitably used to manufacture a secondary battery excellent in charge and discharge characteristics.

In particular, in the present embodiment, the electrode manufacturing method further includes, between the organic solvent removing step and the molding step, an organic substance removing step of removing an organic substance contained in the composition obtained by removing the organic solvent from the precursor solution, and a pulverization step of pulverizing the composition obtained in the organic substance removing step.

### 3-1 Organic Solvent Removing Step

In the organic solvent removing step, the organic solvent is removed by heating the above-described precursor solution according to the present disclosure.

In this step, it is sufficient to remove at least a part of the organic solvent contained in the precursor solution, and it is not necessary to remove all of the organic solvent. Even when not all of the organic solvent is removed in this step, the remaining organic solvent can be sufficiently removed in the later steps.

In this step, 80 mass% or more, more preferably 90 mass% or more, and still more preferably 95 mass% or more of all of the organic solvent contained in the precursor solution are removed.

This step can be suitably performed by a heat treatment.

In this case, conditions of the heat treatment depend on a boiling point, vapor pressure, and the like of the organic solvent, and a heating temperature in the heat treatment is preferably 50°C or higher and 250°C or lower, more preferably 60°C or higher and 230°C or lower, and still more preferably 80°C or higher and 200°C or lower.

In addition, a heating time in the heat treatment is preferably 10 minutes or longer and 180 minutes or shorter, and more preferably 20 minutes or longer and 120 minutes or shorter.

The heat treatment in this step may be performed at a constant temperature, or may be performed by changing the temperature on the way.

For example, in this step, a first heat treatment may be performed at a temperature lower than the boiling point of the organic solvent constituting the precursor solution, and then a second heat treatment may be performed at a temperature higher than the boiling point of the organic solvent.

Accordingly, the organic solvent can be efficiently removed as a whole while suitably preventing sudden boiling or the like in this step, and the content of the organic solvent in the composition obtained at the end of this step can be lowered.

The heat treatment may be performed in any atmosphere, and may be performed in an oxidizing atmosphere such as air or an oxygen gas atmosphere, or may be performed in a non-oxidizing atmosphere such as an inert gas such as a nitrogen gas, a helium gas or an argon gas. In addition, the heat treatment may be performed under a reduced pressure, under a vacuum, or under a pressure.

During the heat treatment, the atmosphere may be maintained under substantially the same conditions or may be changed to different conditions.

In addition, in this step, the above treatments may be performed in combination.

Before this step or during this step, the precursor solution according to the present disclosure may be mixed with the active material particles. In such a case, the active material particles to be mixed preferably satisfy the conditions described in 1-4.

### 3-2 Organic Substance Removing Step

In the organic substance removing step, the organic substance contained in the composition obtained by removing the organic solvent from the precursor solution is removed.

As described above, by including, between the organic solvent removing step and the molding step, the organic substance removing step of removing the organic substance contained in the composition obtained by removing the organic solvent from the precursor solution, the organic substance can be effectively prevented from unintentionally remaining in the finally formed electrode, and reliability and charge and discharge characteristics of the secondary battery can be made excellent.

Examples of the organic substance to be removed in this step include the organic solvent remaining after the organic solvent removing step, the lithium oxoacid salt, or an organic compound in the Mt compound, which is derived from an atomic group containing a carbon atom.

In this step, it is sufficient to remove at least a part of the organic substance contained in the composition obtained by removing the organic solvent from the precursor solution, and it is not necessary to remove all of the organic substance. Even when not all of the organic substance is removed in this step, the remaining organic substance can be sufficiently removed in the later steps.

This step is preferably performed such that a content of the organic substance in the composition obtained at the end of this step is 0.5 mass% or less, and more preferably 0.1 mass% or less.

This step can be suitably performed by a heat treatment.

The heat treatment in this step may be performed under constant conditions or may be performed under different conditions in combination.

The heating temperature in this step is preferably 300°C or higher and 600°C or lower, more preferably 330°C or higher and 570°C or lower, and still more preferably 350°C or higher and 570°C or lower.

In addition, the heating time in this step is preferably 5 minutes or longer and 240 minutes or shorter, more preferably 10 minutes or longer and 180 minutes or shorter, and still more preferably 15 minutes or longer and 120 minutes or shorter.

The heat treatment in this step may be performed in any atmosphere, and may be performed in an oxidizing atmosphere such as air or an oxygen gas atmosphere, or may be performed in a non-oxidizing atmosphere such as an inert gas such as a nitrogen gas, a helium gas or an argon gas. In addition, this step may be performed under a reduced pressure, under a vacuum, or under a pressure. In particular, this step is preferably performed in an oxidizing atmosphere.

During the heat treatment, the atmosphere may be maintained under substantially the same conditions or may be changed to different conditions.

In addition, in this step, the above treatment may be performed in combination.

Before this step, the composition to be subjected to this step may be mixed with the active material particles. In such a case, the active material particles to be mixed preferably satisfy the conditions described in 1-4.

### 3-3 Pulverization Step

In the pulverization step, the composition obtained by the organic substance removing step is pulverized.

Accordingly, a composition containing the precursor powder according to the present disclosure can be obtained. In particular, the composition to be subjected to the subsequent molding step can contain precursor particles having a suitable size, and the molding step can be suitably performed. As a result, the reliability of the finally obtained electrode and secondary battery can be made excellent.

The pulverization of the composition in this step can be performed by using, for example, an agate mortar.

Before this step, the composition to be subjected to this step may be mixed with the active material particles. In such a case, the active material particles to be mixed preferably satisfy the conditions described in 1-4.

### 3-4 Molding Step

In the molding step, the composition containing the plurality of precursor particles obtained in the organic solvent removing step is molded to obtain a molded article. In particular, in the present embodiment, after the organic solvent removing step, the composition containing the precursor particles obtained in the organic substance removing step and the pulverization step is molded to obtain a molded article.

In this step, the composition to be subjected to this step may be mixed with the active material particles. In such a case, the active material particles to be mixed preferably satisfy the conditions described in 1-4.

The composition to be subjected to this step may contain active material particles in addition to the precursor particles.

Accordingly, in the molding step, the precursor particles and the active material can be mixed at any mixing ratio and then molded in a uniform mixed state at once, and precise formulation can be easily performed, for example, when a plurality of kinds of active materials or active materials having different particle diameters are mixed, or when a plurality of kinds of precursors of the lithium salt of the metal acid of Mt are mixed.

In addition, the composition to be subjected to this step may contain on the surface of the active material particles, as the precursor particles, particles including the coating layer formed by using the precursor solution according to the present disclosure.

This step can be suitably performed, for example, by pressurizing the composition containing the plurality of precursor particles obtained in the organic solvent removing step.

A pressure at the time of pressurizing the composition in this step is not particularly limited, and is preferably 300 MPa or more and 1000 MPa or less, and more preferably 400 MPa or more and 900 MPa or less.

In addition, the temperature during molding in this step is not particularly limited, and is preferably 400°C or higher and 1000°C or lower, and more preferably 600°C or higher and 900°C or lower.

A shape of the molded article formed in this step is not particularly limited, and generally corresponds to an electrode to be manufactured.

### 3-5 Firing Step

In the firing step, the molded article is fired. Accordingly, an electrode is obtained.

The composition to be subjected to the firing step generally contains oxoacid ions derived from the precursor solution according to the present disclosure, which is used as a raw material, and the oxoacid ions can be reduced by a heat treatment.

The heating temperature in this step is not particularly limited, and is preferably 450°C or higher and 1000°C or lower, more preferably 550°C or higher and 980°C or lower, and still more preferably 600°C or higher and 950°C or lower.

Accordingly, an electrode having desired characteristics can be stably formed. In addition, by performing firing at a low temperature in this way, for example, volatilization of lithium ions or the like can be suitably reduced, and an effect of manufacturing an all-solid-state battery excellent in battery capacity at a high load can be exerted. Further, productivity of the electrode and a secondary battery including the electrode can be made excellent, and it is also preferable from the viewpoint of energy saving.

The heating time in this step is not particularly limited, and is preferably 5 minutes or longer and 300 minutes or shorter, more preferably 10 minutes or longer and 120 minutes or shorter, and still more preferably 15 minutes or longer and 60 minutes or shorter.

Accordingly, an electrode having desired characteristics can be stably formed. In addition, by performing firing in a relatively short period of time in this way, for example, volatilization of lithium ions or the like can be suitably reduced, and the effect of manufacturing an all-solid-state battery excellent in battery capacity at a high load can be exerted. In addition, the productivity of the electrode and a secondary battery including the electrode can be made excellent, and it is also preferable from the viewpoint of energy saving.

This step may be performed in any atmosphere, and may be performed in an oxidizing atmosphere such as air or an oxygen gas atmosphere, or may be performed in a non-oxidizing atmosphere such as an inert gas such as a nitrogen gas, a helium gas or an argon gas. In addition, this step may be performed under a reduced pressure, under a vacuum, or under a pressure. In particular, this step is preferably performed in an oxidizing atmosphere.

Further, in this step, the atmosphere may be maintained under substantially the same conditions or may be changed to different conditions.

The electrode obtained as described above generally does not substantially contain an oxoacid ion contained in the precursor solution according to the present disclosure, which is used as a raw material. Specifically, the content of the oxoacid ion in the electrode obtained as described above is generally 100 ppm or less, preferably 50 ppm or less, and more preferably 10 ppm or less.

Accordingly, a content of undesirable impurities in the electrode can be reduced, and the characteristics and reliability of the electrode and the secondary battery can be made excellent.

A denseness of the active material particles in the electrode obtained by this step is preferably 60% or more, and more preferably 60% or more and 80% or less.

Accordingly, an electron conduction path and a lithium ion conduction path can be suitably ensured, and the charge and discharge characteristics, for example, the charge and discharge characteristics at a high load can be made particularly excellent.

In the present description, the denseness of the active material particles in the electrode refers to a ratio of a true density of the coated active material particles to a density calculated based on an actual shape and weight of the electrode.

### 4 Secondary Battery

Next, a secondary battery to which the present disclosure is applied will be described.

The secondary battery according to the present disclosure includes an electrode formed by using the above-described precursor solution according to the present disclosure, and can be manufactured by using, for example, the above-described electrode manufacturing method.

Such a secondary battery has a low internal resistance and excellent charge and discharge characteristics.

In the secondary battery according to the present disclosure, for example, the electrode formed by using the precursor solution according to the present disclosure may be only the positive electrode, may be only the negative electrode, or may be both the positive electrode and the negative electrode.

### 4-1 Secondary Battery according to First Embodiment

Hereinafter, a lithium ion secondary battery as a secondary battery according to a first embodiment will be described.

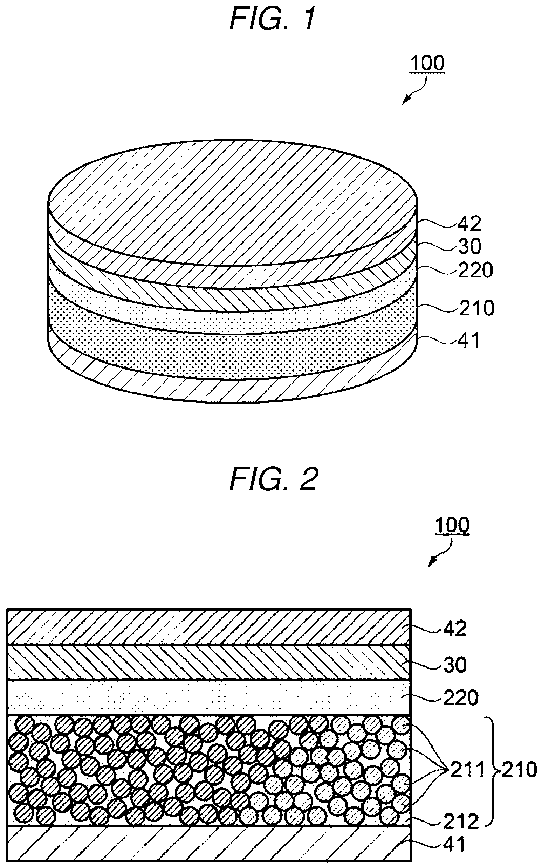

FIG. 1 is a schematic perspective view schematically showing a configuration of the lithium ion secondary battery according to the first embodiment. FIG. 2 is a schematic cross-sectional view schematically showing a structure of the lithium ion secondary battery according to the first embodiment.

As shown in FIG. 1, a lithium ion secondary battery 100 according to the present embodiment includes a positive electrode mixture 210 serving as a positive electrode, and a solid electrolyte layer 220 and a negative electrode 30 that are sequentially laminated on the positive electrode mixture 210. In addition, a current collector 41 in contact with the positive electrode mixture 210 is provided on a surface of the positive electrode mixture 210 opposite to a surface facing the solid electrolyte layer 220, and a current collector 42 in contact with the negative electrode 30 is provided on a surface of the negative electrode 30 opposite to a surface facing the solid electrolyte layer 220. All of the positive electrode mixture 210, the solid electrolyte layer 220, and the negative electrode 30 are formed in a solid phase, and therefore, the lithium ion secondary battery 100 is an all-solid-state battery capable of being charged and discharged.

A shape of the lithium ion secondary battery 100 is not particularly limited, and may be, for example, a polygonal disc shape, and in the illustrated configuration, a disc shape. A size of the lithium ion secondary battery 100 is not particularly limited, and for example, a diameter of the lithium ion secondary battery 100 is, for example, 10 mm or more and 20 mm or less, and a thickness of the lithium ion secondary battery 100 is, for example, 0.1 mm or more and 1.0 mm or less.

Being small and thin as described above, the lithium ion secondary battery 100 can be charged and discharged, and is in an all solid state, and thus can be suitably used as a power source of a portable information terminal such as a smartphone. As will be described later, the lithium ion secondary battery 100 may be used for a purpose other than the power source of the portable information terminal.

Hereinafter, configurations of the lithium ion secondary battery 100 will be described.

### 4-1-1 Positive Electrode Mixture

As shown in FIG. 2, the positive electrode mixture 210 in the lithium ion secondary battery 100 contains positive electrode active material particles 211 as the active material particles and a lithium salt 212 of a metal acid of Mt formed by using the precursor solution according to the present disclosure. In the positive electrode mixture 210, a battery reaction rate in the lithium ion secondary battery 100 can be increased by increasing an area of an interface between the positive electrode active material particles 211 and the lithium salt 212 of the metal acid of Mt.

The positive electrode active material particles 211 preferably satisfy the conditions described in 1-4.

An average particle diameter of the positive electrode active material particles 211 that is within the above-described range can easily achieve both an actual capacity density close to a theoretical capacity of the positive electrode active material particles 211 and a high charge and discharge rate.

A particle size distribution of the positive electrode active material particles 211 is not particularly limited, and for example, in a particle size distribution having one peak, a half-value width of the peak can be set to 0.15 µm or more and 19 µm or less. In addition, peaks in the particle size distribution of the positive electrode active material particles 211 may be two or more.

In FIG. 2, a shape of the positive electrode active material particles 211 is shown as a spherical shape. The shape of the positive electrode active material particles 211 is not limited to a spherical shape, and may be, for example, various shapes such as a columnar shape, a plate-like shape, a scale-like shape, a hollow shape, and an amorphous shape, or a combination of two or more thereof.

Preferably 0.0004 ≤ XS/XA ≤ 0.005, and more preferably 0.0006 ≤ XS/XA ≤ 0.004, in which a content of the positive electrode active material particles 211 in the positive electrode mixture 210 is XA [mass%] and a content of the lithium salt 212 of the metallic acid of Mt in the positive electrode mixture 210 is XS [mass%].

Further, the positive electrode mixture 210 may contain, in addition to the positive electrode active material particles 211 and the lithium salt 212 of the metal acid of Mt, a conductive additive, a binder, and the like.

The conductive additive may be any conductive material in which electrochemical interaction at a positive electrode reaction potential can be ignored, and specifically, for example, carbon materials such as acetylene black, Ketjen black, and carbon nanotube, noble metals such as palladium and platinum, and conductive oxides such as SnO₂, ZnO, RuO₂, ReO₃, and Ir₂O₃ can be used.

A thickness of the positive electrode mixture 210 is not particularly limited, and is preferably 1.1 µm or more and 500 µm or less, and more preferably 2.5 µm or more and 100 µm or less.

Examples of a method for forming the positive electrode mixture 210 include a green sheet method, a press firing method, and a cast firing method. For the purposes of improving an adhesion between the positive electrode mixture 210 and the solid electrolyte layer 220, improving an output and a battery capacity of the lithium ion secondary battery 100 due to an increase in a specific surface area, and the like, for example, a three-dimensional pattern structure such as a dimple, a trench, and a pillar may be formed on a surface of the positive electrode mixture 210 in contact with the solid electrolyte layer 220.

### 4-1-2 Solid Electrolyte Layer

Examples of a constituent material of the solid electrolyte layer 220 include crystalline and non-crystalline substances of various oxide solid electrolytes, sulfide solid electrolytes, nitride solid electrolytes, halide solid electrolytes, hydride solid electrolytes, dry polymer electrolytes, and quasi-solid electrolytes. The constituent material may be a combination of one or two or more selected from the above.

Examples of a crystalline oxide include: Li_{0.35}La_{0.55}TiO₃, Li_{0.2}La_{0.27}NbO₃, and a perovskite crystal or perovskite-like crystal in which a part of elements constituting these crystals is substituted with N, F, Al, Sr, Sc, Nb, Ta, Sb, lanthanoid elements, or the like; Li₇La₃Zr₂O₁₂, Li₅La₃Nb₂O₁₂, Li₅BAla₂TaO₁₂, and a garnet crystal or garnet-like crystal in which a part of elements constituting these crystals is substituted with N, F, Al, Sr, Sc, Nb, Ta, Sb, lanthanoid elements, or the like; Li_{1.3}Ti_{1.7}Al_{0.3}(PO₄)₃, Li_{1.4}Al_{0.4}Ti_{1.6}(PO₄)₃, Li_{1.4}Al_{0.4}Ti_{1.4}Ge_{0.2}(PO₄)₃, and a NASICON crystal in which a part of elements constituting these crystals is substituted with N, F, Al, Sr, Sc, Nb, Ta, Sb, lanthanoid elements, or the like; a LISICON crystal such as Li₁₄ZnGe₄O₁₆; and other crystalline substances such as Li_{3.4}V_{0.6}Si_{0.4}O₄, Li_{3.6}V_{0.4}Ge_{0.6}O₄, and Li₂₊ₓC₁₋ₓBₓO₃.

Examples of a crystalline sulfide include Li₁₀GeP₂S₁₂, Li_{9.6}P₃S₁₂, Li_{9.54}Si_{1.74}P_{1.44}S_{11.7}Cl_{0.3}, and Li₃PS₄.

Examples of other non-crystalline substances include Li₂O-TiO₂, La₂O₃-Li₂O-TiO₂, LiNbO₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₄SiO₄-Li₄ZrO₄, SiO₂-P₂O₅-Li₂O, SiO₂-P₂O₅-LiCl, Li₂O-LiCl-B₂O₃, LiAlCl₄, LiAlF₄, LiF-Al₂O₃, LiBr-Al₂O₃, Li_{2.88}PO_{3.73}N_{0.14}, Li₃N-LiCl, Li₆NBr₃, Li₂S-SiS₂, and Li₂S-SiS₂-P₂S₅.

When the solid electrolyte layer 220 is made of a crystalline substance, the crystalline substance preferably has a crystal structure such as a cubic crystal having a small crystal plane anisotropy in a lithium ion conduction direction. Further, when the solid electrolyte layer 220 is made of a non-crystalline substance, anisotropy of lithium ion conduction is reduced. Therefore, both the crystalline substance and the non-crystalline substance as described above are preferable as a solid electrolyte constituting the solid electrolyte layer 220.

A thickness of the solid electrolyte layer 220 is preferably 0.1 µm or more and 100 µm or less, and more preferably 0.2 µm or more and 10 µm or less. A thickness of the solid electrolyte layer 220 that is within the above range can further reduce an internal resistance of the solid electrolyte layer 220, and can effectively prevent occurrence of a short circuit between the positive electrode mixture 210 and the negative electrode 30.

For the purposes of improving an adhesion between the solid electrolyte layer 220 and the negative electrode 30, improving the output and the battery capacity of the lithium ion secondary battery 100 due to an increase in a specific surface area, and the like, for example, a three-dimensional pattern structure such as a dimple, a trench, and a pillar, may be formed on a surface of the solid electrolyte layer 220 in contact with the negative electrode 30.

Examples of a method for forming the solid electrolyte layer 220 include vapor phase deposition methods such as a vacuum deposition method, a sputtering method, a CVD method, a PLD method, an ALD method, and an aerosol deposition method, and chemical deposition methods using a solution such as a sol-gel method and an MOD method. In this case, if necessary, a heat treatment may be performed after film formation to change a crystal phase of a constituent material of the formed film.

In addition, for example, an electrolyte or fine particles of a precursor thereof may be slurried together with an appropriate binder to form a coating film by squeegee or screen printing, and the coating film may be dried and fired to be baked on a surface of the solid electrolyte layer 220.

### 4-1-3 Negative Electrode

The negative electrode 30 may be any electrode that is formed of a negative electrode active material that repeats electrochemical occluding and discharging of lithium ions at a potential lower than that of the positive electrode active material forming the positive electrode mixture 210 serving as a positive electrode.

Specifically, examples of the negative electrode active material constituting the negative electrode 30 include Nb₂O₅, V₂O₅, TiO₂, In₂O₃, ZnO, SnO₂, NiO, ITO, AZO, GZO, ATO, FTO, and lithium multiple oxides such as Li₄Ti₅O₁₂ and Li₂Ti₃O₇. In addition, examples thereof include metals and alloys such as Li, Al, Si, Si-Mn, Si-Co, Si-Ni, Sn, Zn, Sb, Bi, In, and Au, a carbon material, and a material in which a lithium ion is inserted between layers of a carbon material, such as LiC₂₄ and LiC₆.

In view of conductivity and ion diffusion distance, the negative electrode 30 is preferably formed as a thin film on one surface of the solid electrolyte layer 220.

A thickness of the negative electrode 30 formed as the thin film is not particularly limited, and is preferably 0.1 µm or more and 500 µm or less, and more preferably 0.3 µm or more and 100 µm or less.

Examples of a method for forming the negative electrode 30 include vapor phase deposition methods such as a vacuum deposition method, a sputtering method, a CVD method, a PLD method, an ALD method, and an aerosol deposition method, and chemical deposition methods using a solution such as a sol-gel method and an MOD method. In addition, for example, fine particles of the negative electrode active material may be slurried together with an appropriate binder to form a coating film by squeegee or screen printing, and the coating film may be dried and fired to be baked on the surface of the solid electrolyte layer 220.

### 4-1-4 Current Collector

The current collectors 41 and 42 are conductors provided to exchange electrons with the positive electrode mixture 210 or the negative electrode 30. Generally, the current collector is made of a material having a sufficiently low electrical resistance and having substantially no change in electrical conductivity and mechanical structure due to charge and discharge. Specifically, examples of a constituent material of the current collector 41 of the positive electrode mixture 210 include Al, Ti, Pt, and Au. In addition, examples of a constituent material of the current collector 42 of the negative electrode 30 preferably include Cu.

The current collectors 41 and 42 are generally provided to reduce a contact resistance with the positive electrode mixture 210 and the negative electrode 30, respectively. Examples of a shape of the current collectors 41 and 42 include a plate shape and a mesh shape.

A thickness of the current collectors 41 and 42 is not particularly limited, and is preferably 7 µm or more and 85 µm or less, and more preferably 10 µm or more and 60 µm or less.

In the illustrated configuration, the lithium ion secondary battery 100 includes a pair of current collectors 41 and 42. Alternatively, for example, when a plurality of lithium ion secondary batteries 100 are laminated and electrically coupled in series to be used, the lithium ion secondary battery 100 may only include the current collector 41 of the current collectors 41 and 42.

The lithium ion secondary battery 100 may be used for any purpose. Examples of an electronic device in which the lithium ion secondary battery 100 is used as a power source include a personal computer, a digital camera, a mobile phone, a smartphone, a music player, a tablet terminal, a watch, a smart watch, various printers such as an inkjet printer, a television, a projector, a head-up display, wearable terminals such as a wireless headphone, a wireless earphone, a smart glass, and a head-mounted display, a video camera, a video tape recorder, a car navigation device, a drive recorder, a pager, an electronic notebook, an electronic dictionary, an electronic translation device, a calculator, an electronic game machine, a toy, a word processor, a workstation, a robot, a television phone, a crime prevention television monitor, electronic binoculars, a POS terminal, a medical device, a fish finder, various measuring devices, a device for a mobile terminal base station, various instruments for a vehicle, a railway vehicle, an aircraft, a helicopter, and a ship, a flight simulator, and a network server. In addition, the lithium ion secondary battery 100 may be used in, for example, a moving object such as an automobile and a ship. Specifically, for example, the lithium ion secondary battery 100 can be suitably used as, for example, a storage battery of an electric vehicle, a plug-in hybrid vehicle, a hybrid vehicle, and a fuel cell vehicle. Further, the lithium ion secondary battery 100 can also be used as, for example, a household power source, an industrial power source, and a storage battery for solar power generation.

### 4-2 Secondary Battery according to Second Embodiment

Next, a lithium ion secondary battery as a secondary battery according to a second embodiment will be described.

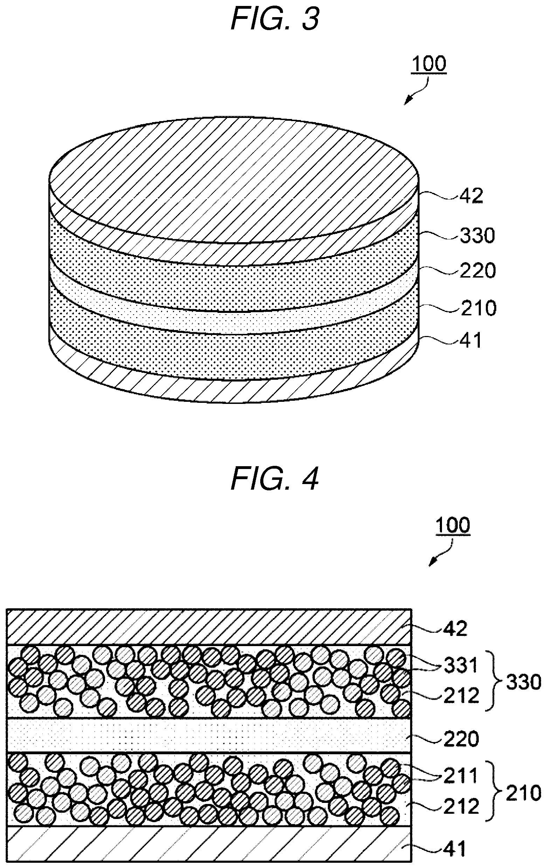

FIG. 3 is a schematic perspective view schematically showing a configuration of the lithium ion secondary battery according to the second embodiment. FIG. 4 is a schematic cross-sectional view schematically showing a structure of the lithium ion secondary battery according to the second embodiment.

Hereinafter, the lithium ion secondary battery according to the second embodiment will be described with reference to these drawings. Differences from the above-described embodiment will be mainly described, and description of same matters will be omitted.

As shown in FIG. 3, the lithium ion secondary battery 100 according to the present embodiment includes the positive electrode mixture 210 serving as a positive electrode, and the solid electrolyte layer 220 and a negative electrode mixture 330 serving as a negative electrode that are sequentially laminated on the positive electrode mixture 210. In addition, the current collector 41 in contact with the positive electrode mixture 210 is provided on a surface of the positive electrode mixture 210 opposite to a surface facing the solid electrolyte layer 220, and the current collector 42 in contact with the negative electrode mixture 330 is provided on a surface of the negative electrode mixture 330 opposite to a surface facing the solid electrolyte layer 220.

Hereinafter, the negative electrode mixture 330 different from the configuration of the lithium ion secondary battery 100 according to the above-described embodiment will be described.

### 4-2-1 Negative Electrode Mixture

As shown in FIG. 4, the negative electrode mixture 330 in the lithium ion secondary battery 100 according to the present embodiment contains negative electrode active material particles 331 as the active material particles and the lithium salt 212 of the metal acid of Mt formed by using the precursor solution according to the present disclosure. In the negative electrode mixture 330, a battery reaction rate in the lithium ion secondary battery 100 can be increased by increasing an area of an interface between the negative electrode active material particles 331 and the lithium salt 212 of the metal acid of Mt.

The negative electrode active material particles 331 preferably satisfy the conditions described in 1-4.

An average particle diameter of the negative electrode active material particles 331 that are within the above-described range can easily achieve both an actual capacity density close to a theoretical capacity of the negative electrode active material particles 331 and a high charge and discharge rate.

A particle size distribution of the negative electrode active material particles 331 is not particularly limited, and for example, in a particle size distribution having one peak, a half-value width of the peak can be set to 0.15 µm or more and 19 µm or less. In addition, peaks in the particle size distribution of the negative electrode active material particles 331 may be two or more.

In FIG. 4, a shape of the negative electrode active material particles 331 is shown as a spherical shape, and the shape of the negative electrode active material particles 331 is not limited to a spherical shape, and may be, for example, various shapes such as a columnar shape, a plate-like shape, a scale-like shape, a hollow shape, and an amorphous shape, or a combination of two or more thereof.

Preferably 0.0003 ≤ XS/XB ≤ 0.005, and more preferably 0.0004 ≤ XS/XB ≤ 0.003, in which a content of the negative electrode active material particles 331 in the negative electrode mixture 330 is XB [mass%] and a content of the lithium salt 212 of the metal acid of Mt in the negative electrode mixture 330 is XS [mass%].

Further, the negative electrode mixture 330 may contain, in addition to the negative electrode active material particles 331 and the lithium salt 212 of the metal acid of Mt, a conductive additive, a binder, and the like.

The conductive additive may be any conductive material in which electrochemical interaction at a negative electrode reaction potential can be ignored, and specifically, for example, carbon materials such as acetylene black, Ketjen black, and carbon nanotube, noble metals such as palladium and platinum, and conductive oxides such as SnO₂, ZnO, RuO₂, ReO₃, and Ir₂O₃ can be used.

A thickness of the negative electrode mixture 330 is not particularly limited, and is preferably 0.1 µm or more and 500 µm or less, and more preferably 0.3 µm or more and 100 µm or less.

### 4-3 Secondary Battery according to Third Embodiment

Hereinafter, a lithium ion secondary battery as a secondary battery according to a third embodiment will be described.

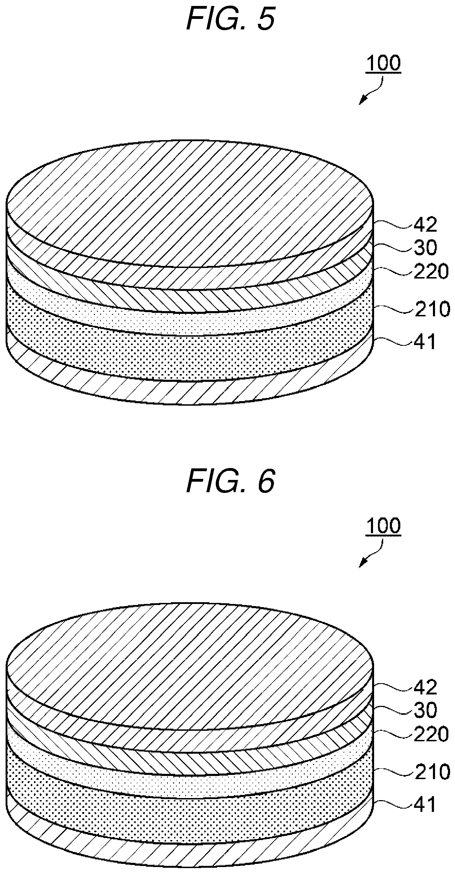

FIG. 5 is a schematic perspective view schematically showing a configuration of the lithium ion secondary battery according to the third embodiment. FIG. 6 is a schematic cross-sectional view schematically showing a structure of the lithium ion secondary battery according to the third embodiment.

Hereinafter, the lithium ion secondary battery according to the third embodiment will be described with reference to these drawings. Differences from the above-described embodiments will be mainly described, and description of same matters will be omitted.

As shown in FIG. 5, the lithium ion secondary battery 100 according to the present embodiment includes a positive electrode 10, and the solid electrolyte layer 220 and the negative electrode mixture 330 that are sequentially laminated on the positive electrode 10. In addition, the current collector 41 in contact with the positive electrode 10 is provided on a surface of the positive electrode 10 opposite to a surface facing the solid electrolyte layer 220, and the current collector 42 in contact with the negative electrode mixture 330 is provided on a surface of the negative electrode mixture 330 opposite to a surface facing the solid electrolyte layer 220.

Hereinafter, the positive electrode 10 different from the configuration of the lithium ion secondary battery 100 according to the above-described embodiments will be described.

### 4-3-1 Positive Electrode

The positive electrode 10 may be any electrode that is formed of a positive electrode active material that repeats electrochemical occluding and discharging of lithium ions.

Specifically, examples of the positive electrode active material constituting the positive electrode 10 include a lithium multiple oxide containing at least Li and one or more elements selected from the group consisting of V, Cr, Mn, Fe, Co, Ni, and Cu. Examples of such a multiple oxide include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. In addition, examples of the positive electrode active material constituting the positive electrode 10 include fluorides such as LiFeF₃, boride complex compounds such as LiBH₄ and Li₄BN₃H₁₀, iodine complex compounds such as a polyvinylpyridine-iodine complex, and non-metal compounds such as sulfur.

In view of conductivity and ion diffusion distance, the positive electrode 10 is preferably formed as a thin film on one surface of the solid electrolyte layer 220.

A thickness of the positive electrode 10 formed as the thin film is not particularly limited, and is preferably 0.1 µm or more and 500 µm or less, and more preferably 0.3 µm or more and 100 µm or less.

Examples of a method for forming the positive electrode 10 include vapor phase deposition methods such as a vacuum deposition method, a sputtering method, a CVD method, a PLD method, an ALD method, and an aerosol deposition method, and chemical deposition methods using a solution such as a sol-gel method and an MOD method. In addition, for example, fine particles of the positive electrode active material may be slurried together with an appropriate binder to form a coating film by squeegee or screen printing, and the coating film may be dried and fired to be baked on the surface of the solid electrolyte layer 220.

In the first, second, and third embodiments, another layer may be provided between layers or on the surface of the layer constituting the lithium ion secondary battery 100. Examples of such a layer include an adhesive layer, an insulation layer, and a protective layer.

The preferred embodiments of the present disclosure have been described above, and the present disclosure is not limited thereto.

For example, the precursor powder according to the present disclosure is not limited to those manufactured by the above-described method.

Further, when the present disclosure is applied to a lithium ion secondary battery, a configuration of the lithium ion secondary battery is not limited to those according to the above-described embodiments.

Further, the electrode manufacturing method according to the present disclosure may further include other steps in addition to the above-described steps.

### Examples

Next, specific examples of the present disclosure will be described.

### 5 Preparation of Precursor Solution

### 5-1 Preparation of Raw Material Solution for Preparing Precursor Solution

First, a raw material solution used for preparing a precursor solution of each example was prepared.

### 5-1-1 Preparation of 2-n-butoxyethanol solution of lithium nitrate

To a 30 mL Pyrex (trade name, manufactured by CORNING Co., Ltd.) reagent bottle equipped with a magnetic stir bar, 1.3789 g of lithium nitrate, manufactured by Kanto Chemical Co., Inc., and having a 3N5 purity of 99.95% and 18.6211 g of Cica special grade 2-n-butoxyethanol (ethylene glycol monobutyl ether) manufactured by Kanto Chemical Co., Inc. were weighed.

Next, the reagent bottle was placed on a hot plate with a magnetic stirrer function, lithium nitrate was completely dissolved in 2-n-butoxyethanol while being stirred at 170°C for 1 hour, followed by gradual cooling to 25°C to obtain a 2-n-butoxyethanol solution having a concentration of lithium nitrate as a lithium oxoacid salt of 1 mol/kg.

A purity of lithium nitrate was measured by using an ion chromatography mass spectrometer.

### 5-1-2 Preparation of ethanol solution of lithium acetate

To a 30 mL Pyrex reagent bottle equipped with a magnetic stir bar, 1.3198 g of lithium acetate having a purity of 98.0% manufactured by FUJIFILM Wako Pure Chemical Corporation and 18.6802 g of Cica special grade ethanol manufactured by Kanto Chemical Co., Inc. were weighed.

Next, the reagent bottle was placed on a hot plate with a magnetic stirrer function, lithium acetate was completely dissolved in ethanol while being stirred at 170°C for 1 hour, followed by gradual cooling to 25°C to obtain an ethanol solution having a concentration of lithium acetate as the lithium oxoacid salt of 1 mol/kg.

### 5-1-3 Preparation of 2-n-butoxyethanol solution of niobium penta-ethoxide

In a low moisture environment in which a dew point was lower than -40°C, 6.3642 g of niobium penta-ethoxide manufactured by Kojundo Chemical Laboratory Co., Ltd. and 13.6358 g of Cica special grade 2-n-butoxyethanol manufactured by Kanto Chemical Co., Ltd. were weighed to a 30 mL Pyrex reagent bottle equipped with a magnetic stir bar.

Next, the reagent bottle was placed on a magnetic stirrer, and niobium penta-ethoxide was completely dissolved in 2-n-butoxyethanol while being stirred at room temperature for 30 minutes to obtain a 2-n-butoxyethanol solution having a concentration of niobium penta-ethoxide as an Mt compound of 1 mol/kg.

### 5-1-4 Preparation of 2-n-butoxyethanol solution of niobium penta-n-butoxide

In a low moisture environment in which the dew point was lower than -40°C, 9.1694 g of 3N niobium penta-n-butoxide manufactured by Kojundo Chemical Laboratory Co., Ltd. and 10.8306 g of Cica special grade 2-n-butoxyethanol manufactured by Kanto Chemical Co., Ltd. were weighed to a 30 mL Pyrex reagent bottle equipped with a magnetic stir bar.

Next, the reagent bottle was placed on a magnetic stirrer, and niobium penta-n-butoxide was completely dissolved in 2-n-butoxyethanol while being stirred at room temperature for 30 minutes to obtain a 2-n-butoxyethanol solution having a concentration of niobium penta-n-butoxide as the Mt compound of 1 mol/kg.

### 5-1-5 Preparation of 2-n-butoxyethanol solution of antimony tri-n-butoxide

In a low moisture environment in which the dew point was lower than -40°C, 6.8227 g of antimony tri-n-butoxide manufactured by Kojundo Chemical Laboratory Co., Ltd. and 13.1773 g of Cica special grade 2-n-butoxyethanol manufactured by Kanto Chemical Co., Ltd. were weighed to a 30 mL Pyrex reagent bottle equipped with a magnetic stir bar.

Next, the reagent bottle was placed on a magnetic stirrer, and antimony tri-n-butoxide was completely dissolved in 2-n-butoxyethanol while being stirred at room temperature for 30 minutes to obtain a 2-n-butoxyethanol solution having a concentration of antimony tri-n-butoxide as the Mt compound of 1 mol/kg.

### 5-1-6 Preparation of 2-n-butoxyethanol solution of tantalum penta-ethoxide

In a low moisture environment in which the dew point was lower than -40°C, 8.1240 g of 5N tantalum penta-ethoxide manufactured by Kojundo Chemical Laboratory Co., Ltd. and 11.8760 g of Cica special grade 2-n-butoxyethanol manufactured by Kanto Chemical Co., Ltd. were weighed to a 30 mL Pyrex reagent bottle equipped with a magnetic stir bar.

Next, the reagent bottle was placed on a magnetic stirrer, and tantalum penta-ethoxide was completely dissolved in 2-n-butoxyethanol while being stirred at room temperature for 30 minutes to obtain a 2-n-butoxyethanol solution having a concentration of tantalum penta-ethoxide as the Mt compound of 1 mol/kg.

### 5-1-7 Preparation of 2-n-butoxyethanol solution of tantalum tetraethoxyacetylacetonate

In a low moisture environment in which the dew point was lower than -40°C, 9.206 g of tantalum tetraethoxyacetylacetonate manufactured by FUJIFILM Wako Pure Chemical Corporation and 10.794 g of Cica special grade 2-n-butoxyethanol manufactured by Kanto Chemical Co., Ltd. were weighed to a 30 mL Pyrex reagent bottle equipped with a magnetic stir bar.

Next, the reagent bottle was placed on a magnetic stirrer, and tantalum tetraethoxyacetylacetonate was completely dissolved in 2-n-butoxyethanol while being stirred at room temperature for 30 minutes to obtain a 2-n-butoxyethanol solution having a concentration of tantalum tetraethoxyacetylacetonate as the Mt compound of 1 mol/kg.

### 5-1-8 Preparation of ethanol solution of tantalum nitrate

In a low moisture environment in which the dew point was lower than -40°C, 9.8194 g of 3N tantalum nitrate manufactured by American Elemens and 10.1806 g of ethanol manufactured by Kanto Chemical Co., Ltd. were weighed to a 30 mL Pyrex reagent bottle equipped with a magnetic stir bar.

Next, the reagent bottle was placed on a magnetic stirrer, and tantalum nitrate was completely dissolved in ethanol while being stirred at room temperature for 30 minutes to obtain an ethanol solution having a concentration of tantalum nitrate as the Mt compound of 1 mol/kg.

### 5-2 Preparation of Precursor Solution

### Example A1

A precursor solution in which a content of niobium as Mt and a content of lithium were equivalent in a molar ratio was prepared as follows.

First, 15.000 g of the 2-n-butoxyethanol solution having a concentration of lithium nitrate of 1 mol/kg prepared in 5-1-1, and 5 mL of 2-n-butoxyethanol as an organic solvent were weighed to a Pyrex reagent bottle, a magnetic stir bar was put therein, and the reagent bottle was placed on a hot plate with a magnetic stirrer function.

Next, the mixture was heated and stirred for 30 minutes while setting a set temperature of the hot plate to 160°C and a rotation speed to 500 rpm, further added with 5 mL of 2-n-butoxyethanol, and heated and stirred again for 30 minutes. Thereafter, the mixture was added with 5 mL of 2-n-butoxyethanol, and then heated and stirred again for 30 minutes. When heating and stirring for 30 minutes was regarded as one dehydration treatment, the dehydration treatment was performed three times.

After the above dehydration treatment, the reagent bottle was sealed with a lid.

Next, the mixture was stirred while setting the set temperature of the hot plate to 25°C, which was the same as room temperature, and the rotation speed to 500 rpm, and was gradually cooled to room temperature.

Next, the reagent bottle was transferred to a dry atmosphere, 15.000 g of the 2-n-butoxyethanol solution having concentration of niobium penta-ethoxide of 1 mol/kg prepared in 5-1-3 was weighed to the reagent bottle, and a magnetic stir bar was put therein. Next, the mixture was stirred at room temperature for 30 minutes while setting the rotation speed of the magnetic stirrer to 500 rpm so as to obtain a precursor solution.

### Example A2

A precursor solution was prepared in the same manner as in Example A1 except that an amount of the 2-n-butoxyethanol solution having a concentration of lithium nitrate of 1 mol/kg prepared in 5-1-1 was 13.500 g.

That is, in the precursor solution of this example, the content of lithium was 0.90 times the content of Mt in mole.

### Example A3

A precursor solution was prepared in the same manner as in Example A1 except that an amount of the 2-n-butoxyethanol solution having a concentration of lithium nitrate of 1 mol/kg prepared in 5-1-1 was 16.500 g.

That is, in the precursor solution of this example, the content of lithium was 1.10 times the content of Mt in mole.

### Example A4

A precursor solution was prepared in the same manner as in Example A1 except that the 2-n-butoxyethanol solution of niobium penta-n-butoxide prepared in 5-1-4 was used instead of the 2-n-butoxyethanol solution of niobium penta-ethoxide prepared in 5-1-3.

That is, in the precursor solution of this example, the content of lithium was 1.00 time the content of Mt in mole.

### Example A5

A precursor solution was prepared in the same manner as in Example A1 except that the 2-n-butoxyethanol solution of antimony tri-n-butoxide prepared in 5-1-5 was used instead of the 2-n-butoxyethanol solution of niobium penta-ethoxide prepared in 5-1-3.

That is, in the precursor solution of this example, the content of lithium was 1.00 time the content of Mt in mole.

### Example A6

A precursor solution was prepared in the same manner as in Example A1 except that the 2-n-butoxyethanol solution of tantalum penta-ethoxide prepared in 5-1-6 was used instead of the 2-n-butoxyethanol solution of niobium penta-ethoxide prepared in 5-1-3.

That is, in the precursor solution of this example, the content of lithium was 1.00 time the content of Mt in mole.

### Example A7

A precursor solution was prepared in the same manner as in Example A1 except that the 2-n-butoxyethanol solution of tantalum tetraethoxyacetylacetonate prepared in 5-1-7 was used instead of the 2-n-butoxyethanol solution of niobium penta-ethoxide prepared in 5-1-3.

That is, in the precursor solution of this example, the content of lithium was 1.00 time the content of Mt in mole.

### Example A8

A precursor solution was prepared in the same manner as in Example A1 except that the ethanol solution of lithium acetate prepared in 5-1-2 was used instead of the 2-n-butoxyethanol solution of lithium nitrate prepared in 5-1-1, and the ethanol solution of tantalum nitrate prepared in 5-1-8 was used instead of the 2-n-butoxyethanol solution of niobium penta-ethoxide prepared in 5-1-3.

That is, in the precursor solution of this example, the content of lithium was 1.00 time the content of Mt in mole.

### Example A9

A precursor solution was prepared in the same manner as in Example A1 except that 7.500 g of the 2-n-butoxyethanol solution of antimony tri-n-butoxide prepared in 5-1-5 and 7.500 g of the 2-n-butoxyethanol solution of tantalum penta-ethoxide prepared in 5-1-6 were used instead of 15.000 g of the 2-n-butoxyethanol solution of niobium penta-ethoxide prepared in 5-1-3.

That is, in the precursor solution of this example, the content of lithium was 1.00 time the content of Mt in mole.

### 6 Preparation and Evaluation of Pellet

### Example B1

The precursor solution according to Example A1 was charged into a titanium beaker having an inner diameter of 92 mm and a height of 90 mm, and the titanium beaker was placed on a hot plate, heated for 1 hour while setting the set temperature of the hot plate to 160°C, and then heated at 180°C for 30 minutes to remove the solvent.

Subsequently, the titanium beaker was heated for 30 minutes while setting the set temperature of the hot plate to 360°C so as to decompose most of the contained organic components by combustion.

Thereafter, the titanium beaker was heated for 1 hour while setting the set temperature of the hot plate to 540°C so as to burn and decompose the remaining organic components. Then, the precursor solution was gradually cooled to room temperature on the hot plate to obtain a calcined body.

Next, the calcined body was transferred to an agate mortar and pulverized to obtain a precursor powder. The precursor powder, which was a powder of the calcined body, was dispersed in water, and a median diameter D50 thereof was measured by using a particle size distribution measuring device MicroTrack MT3300EXII manufactured by Nikkiso Co., Ltd. D50 was 310 nm.

Next, 0.150 g of the precursor powder was weighed to a pellet die as a molding die, which was provided with an exhaust port having an inner diameter of 10 mm, and pressurized at a pressure of 624 MPa for 5 minutes to prepare a calcined body pellet which was a disc-shaped molded product.

Further, the calcined body pellet was charged into a crucible made of magnesium oxide, the crucible was covered with a lid made of magnesium oxide, and the calcined body pellet was subjected to main firing in an electric muffle furnace FP311 manufactured by Yamato Scientific Co., Ltd. The main firing was performed at 700°C for 3 hours. Next, the electric muffle furnace was gradually cooled to room temperature, and a pellet for evaluation having a diameter of about 10.0 mm and a thickness of about 650 µm was taken out from the crucible.

### Examples B2 to B13

A pellet for evaluation was prepared in the same manner as in Example B1 except that the kind of the precursor solution and the heating temperature in the main firing were as shown in Table 1.

D50 of the precursor powder in Example B2 was 285 nm, D50 of the precursor powder in Example B3 was 292 nm, D50 of the precursor powder in Example B4 was 225 nm, D50 of the precursor powder in Example B5 was 195 nm, D50 of the precursor powder in Example B6 was 85 nm, D50 of the precursor powder in Example B7 was 465 nm, D50 of the precursor powder in Example B8 was 348 nm, D50 of the precursor powder in Example B9 was 168 nm, D50 of the precursor powder in Example B10 was 365 nm, D50 of the precursor powder in Example B11 was 183 nm, D50 of the precursor powder in Example B12 was 92 nm, and D50 of the precursor powder in Example B13 was 347 nm.

### Comparative Example B1

To 200 g of an aqueous solution of lithium hydroxide having a pH of 10 and a temperature of 70°C, 2.000 g of Al(NO₃)₃·9H₂O and aqueous ammonia for preventing a variation in pH were added dropwise over 5 hours to generate an Al(OH)₃ coprecipitate. Thereafter, the Al(OH)₃ coprecipitate was taken out from the reaction solution, washed, dried, and then subjected to a heat treatment at a temperature of 400°C for 10 hours in an air atmosphere. Thereafter, a pellet for evaluation was prepared in the same manner as in Example B1.

D50 of the precursor powder in Comparative Example B1 was 5 µm.

Table 1 summaries results of a lithium compound, an Mt compound, and an aluminum compound, which are raw materials of the precursor solution used to manufacture the pellet for evaluation, D50 of the precursor powder, a crystal structure of a constituent material of the pellet for evaluation, the presence or absence of impurities, and a bulk density in Examples B1 to B13 and Comparative Example B1.

D50 of the precursor powder was measured by using the particle size distribution measuring device MicroTrack MT3300EXII manufactured by Nikkiso Co., Ltd. In addition, the crystal structure of the constituent material of the pellet for evaluation was determined by an X-ray diffraction pattern obtained by an analysis using an X-ray diffractometer X'Pert-PRO manufactured by Philips. Further, the bulk density of the pellet for evaluation was calculated based on a relation between a volume and a true specific gravity of a lithium salt of a metal acid of Mt or LiAlO₂ corresponding to Examples and Comparative Examples. The above volume was obtained by determining a volume of the pellet for evaluation based on a measurement result of a diameter using Digimatic caliper CD-15APX manufactured by Mitutoyo Corporation and a measurement result of a thickness using µ-mate which was a digital micrometer manufactured by Sony Corporation.

**Table 1**

| | Lithium compound | | Mt compound/aluminum compound | D50 of precurs or powder | Crystal structure by XRD measurement | Presence or absence of impurity | Bulk density |
|---|---|---|---|---|---|---|---|
| | Kind | Ratio of amount of substance with respect to content of Mt | | | | | |
| Example B1 | Lithium nitrate | 1.00 | Niobium penta-ethoxide | 310 nm | LiNbO₃ | No | 63% |
| Example B2 | Lithium nitrate | 0.90 | Niobium penta-ethoxide | 285 nm | LiNbO₃ | No | 58% |
| Example B3 | Lithium nitrate | 1.10 | Niobium penta-ethoxide | 292 nm | LiNbO₃ | No | 56% |
| Example B4 | Lithium nitrate | 1.00 | Niobium penta-n-butoxide | 225 nm | LiNbO₃ | No | 72% |
| Example B5 | Lithium nitrate | 1.00 | Antimony tri-n-butoxide | 195 nm | LiSbO₃ | No | 72% |
| Example B6 | Lithium nitrate | 1.00 | Antimony tri-n-butoxide | 85 nm | Amorphous | No | 75% |
| Example B7 | Lithium nitrate | 1.00 | Tantalum penta-ethoxide | 465 nm | LiTaO₃ | No | 58% |
| Example B8 | Lithium nitrate | 1.00 | Tantalum tetraethoxyacetylacetonate | 348 nm | LiTaO₃ | No | 64% |
| Example B9 | Lithium acetate | 1.00 | Tantalum nitrate | 168 nm | LiTaO₃ | No | 73% |
| Example B10 | Lithium nitrate | 1.00 | Antimony tri-n-butoxide/tantalum penta-ethoxide | 365 nm | Eutectic LiSbOx LiTaOx | No | 59% |
| Example B11 | Lithium nitrate | 1.00 | Niobium penta-ethoxide | 183 nm | LiNbO₃ | No | 84% |
| Example B12 | Lithium nitrate | 1.00 | Antimony tri-n-butoxide | 92 nm | LiSbO₃ | No | 73% |
| Example B13 | Lithium nitrate | 1.00 | Tantalum tetraethoxyacetylacetonate | 347 nm | LiTaO₃ | No | 61% |
| Comparative Example B1 | Lithium nitrate | No | Aluminum nitrate·9H₂O | 5 µm | γ-Al₂O₃ | Yes | 49% |

A total lithium ion conductivity of each of pellets for evaluation in Examples B1 to B13 and Comparative Example B1 was measured, and each exhibited an insulator behavior.

The total lithium ion conductivity was measured as follows. That is, a metal lithium foil having a diameter of 5 mm was pressed against both surfaces of each pellet for evaluation to form an activation electrode, and an electrochemical impedance (EIS) was measured by using an AC impedance analyzer Solatron 1260 (manufactured by Solatron Anailtical) to determine the total lithium ion conductivity. The EIS was measured in a frequency range of 10⁷ Hz to 10⁻¹ Hz under an AC amplitude of 10 mV. The total lithium ion conductivity determined by measuring the EIS includes a bulk lithium ion conductivity in the pellet and a lithium ion conductivity at a grain boundary.

### 7 Manufacturing 1 of Positive Electrode Powder

### Example C1

The precursor solution prepared in Example A1 and LiNi_{0.5}Co_{0.2}Mn_{0.3}O₂ particles as positive electrode active material particles for a lithium ion secondary battery were mixed at a predetermined ratio, and then were subjected to ultrasonic dispersion at 55°C for 2 hours under an oscillation frequency of 38 kHz and an output of 80W by using an ultrasonic cleaner US-1 with a temperature control function, which was manufactured by AS ONE Corporation.

Thereafter, centrifugal separation was performed by using a centrifugal separator at 10,000 rpm for 3 minutes, and a supernatant liquid was removed.

The obtained precipitate was transferred to a crucible made of magnesium oxide covered with a lid, fired at 360°C for 30 minutes while being supplied with dry air at a flow rate of 1 L/min by using an atmosphere control furnace, then fired at 540°C for 1 hour, further fired at 900°C for 3 hours, and cooled to room temperature. Accordingly, a positive electrode active material powder coated with a lithium salt of a metal acid of Mt and containing a large number of constituent particles in which the LiNi_{0.5}Co_{0.2}Mn_{0.3}O₂ particles as base particles were coated with a coating layer made of trigonal LiNbO₃ was obtained.

### Examples C2 to C13

A positive electrode active material powder coated with a lithium salt of a metal acid of Mt was manufactured in the same manner as in Example C1 except that the precursor solutions prepared in Examples A2 to A13 were used instead of the precursor solution prepared in Example A1, those shown in Table 2 were used as positive electrode active material particles for a lithium ion secondary battery, and a thickness of the coating layer was changed by adjusting a mixing ratio between the precursor solution and the positive electrode active material particles for the lithium ion secondary battery.

### Comparative Example C1

In this Comparative Example, without forming a coating layer on LiCoO₂ particles as positive electrode active material particles for a lithium ion secondary battery, an aggregate of the LiCoO₂ particles was used as a positive electrode active material powder. In other words, instead of a positive electrode active material powder coated with a lithium salt of a metal acid of Mt, a positive electrode active material powder not coated with a lithium salt of a metal acid of Mt was used.

### Comparative Example C2

To 200 g of an aqueous solution of lithium hydroxide having a pH of 10 and a temperature of 70°C, 10 g of lithium cobalt oxide was charged and was dispersed by stirring, and then 0.0154 g of Al(NO₃)₃·9H₂O and aqueous ammonia for preventing a variation in pH were added dropwise over 5 hours to generate an Al(OH)₃ coprecipitate, which was adhered to a surface of lithium cobalt oxide. Thereafter, lithium cobalt oxide to which the Al(OH)₃ coprecipitate was adhered was taken out from the reaction solution, washed, dried, and then subjected to a heat treatment in an air atmosphere at a temperature of 400°C for 10 hours to form a film of an Al-containing oxide on the surface of lithium cobalt oxide, to obtain a positive electrode material.

### Comparative Example C3

In this Comparative Example, without forming a coating layer on LiNi_{0.5}Co_{0.2}Mn_{0.3}O₂ particles as positive electrode active material particles for a lithium ion secondary battery, an aggregate of the LiNi_{0.5}Co_{0.2}Mn_{0.3}O₂ particles was used as a positive electrode active material powder. In other words, in this Comparative Example, instead of a positive electrode active material powder coated with a lithium salt of a metal acid of Mt, a positive electrode active material powder not coated with a lithium salt of a metal acid of Mt was used.

In all of the positive electrode active material powders coated with the lithium salt of the metal acid of Mt according to Examples C1 to C13, the positive electrode active material powders according to Comparative Examples C1 and C3, and the γ-phase Al₂O₃-coated active material powder according to Comparative Example C2 obtained as described above, a content of the solvent was 0.1 mass% or less and a content of the oxoanion was 100 ppm or less. In addition, when a reflected electron image was obtained by measurement using a field emission scanning electron microscope with EDS (manufactured by JEOL Ltd.), nothing was observed on a surface of the positive electrode active material powder on which no coating layer was formed.

When the coating layer in the manufacture process of the positive electrode active material powder coated with the lithium salt of the metal acid of Mt according to Examples C1 to C13, that is, the coating layer after the firing treatment at 360°C for 30 minutes and the firing treatment at 540°C for 1 hour and before the firing treatment at 900°C was measured by using TG-DTA at a temperature increase rate of 10°C/min, only one exothermic peak was observed in a range of 300°C or higher and 1000°C or lower. Thus, in Examples C1 to C13, it can be said that the coating layer in the above manufacture process, that is, the coating layer made of a precursor of the lithium salt of the metal acid of Mt was substantially formed in a single crystal phase. In Examples C1 to C13, the coating layer of the constituent particles of the finally obtained positive electrode active material powder coated with the lithium salt of the metal acid of Mt was made of the lithium salt of the metal acid of Mt. Further, in all of Examples C1 to C13, a content of a liquid component contained in a composition in the above manufacture process was 0.1 mass% or less. Furthermore, in all of Examples C1 to C13, a crystal particle diameter of an oxide contained in the coating layer in the above manufacture process was 20 nm or more and 200 nm or less.

Table 2 summarizes configurations of the positive electrode active material powders coated with the lithium salt of the metal acid of Mt according to Examples C1 to C13, the positive electrode active material powders according to Comparative Examples C1 and C3, and the γ-phase Al₂O₃-coated positive electrode active material powder according to Comparative Example C2.

**Table 2**

| | Base particle | | Coating layer | | | T/D |
|---|---|---|---|---|---|---|
| | Composition | Average particle diameter D [µm] | Composition | Crystal phase | Thickness T [nm] | |
| Example C1 | LiNi_{0.5}Co_{0.2}Mn_{0.3}O₂ | 7 | LiNbO₃ | Trigonal LiNbO₃ | 6.3 | 0.0009 |
| Example C2 | LiNi_{0.5}Co_{0.2}Mn_{0.3}O₂ | 7 | LiNbO₃ | Trigonal LiNbO₃ (+LiNb₃O₈) | 9.8 | 0.0014 |
| Example C3 | LiNi_{0.5}Co_{0.2}Mn_{0.3}O₂ | 7 | LiNbO₃ | Trigonal LiNbO₃(+ Li₃CO₃) | 7.8 | 0.0011 |
| Example C4 | LiNi_{0.5}Co_{0.2}Mn_{0.3}O₂ | 7 | LiNbO₃ | Trigonal LiNbO₃ | 8.4 | 0.0013 |
| Example C5 | LiNi_{0.5}Co_{0.2}Mn_{0.3}O₂ | 7 | LiSbO₃ | Cubic LiSbOx | 6.7 | 0.0010 |
| Example C6 | LiNi_{0.5}Co_{0.2}Mn_{0.3}O₂ | 7 | LiSbO₃ | Non-crystalline LiSbOₓ | 5.1 | 0.0007 |
| Example C7 | LiCoO₂ | 5 | LiTaO₃ | Trigonal LiTaOx | 13.5 | 0.0027 |
| Example C8 | LiCoO₂ | 5 | LiTaO₃ | Trigonal LiTaOx | 10.2 | 0.0020 |
| Example C9 | LiCoO₂ | 5 | LiTaO₃ | Trigonal LiTaOx | 9.8 | 0.0020 |
| Example C10 | LiCoO₂ | 5 | LiSbO₃ LiTaO₃ | Cubic LiSbOₓ + trigonal LiTaOx | 11.5 | 0.0023 |
| Example C11 | LiNi_{0.5}Co_{0.2}Mn_{0.3}O₂ | 7 | LiNbO₃ | Trigonal LiNbO₃ | 6.3 | 0.0009 |
| Example C12 | LiNi_{0.5}Co_{0.2}Mn_{0.3}O₂ | 7 | LiSbO₃ | Cubic LiSbOx | 7.0 | 0.0010 |
| Example C13 | LiCoO₂ | 5 | LiTaO₃ | Trigonal LiTaOx | 14.2 | 0.0028 |
| Comparative Example C1 | LiCoO₂ | 5 | - | - | - | - |
| Comparative Example C2 | LiCoO₂ | 5 | Al₂O₃ | γ-phase | 5.0 | 0.001 |
| Comparative Example C3 | LiNi_{0.5}Co_{0.2}Mn_{0.3}O₂ | 7 | - | - | - | - |

### 8 Evaluation 1 on Positive Electrode Powder

The positive electrode active material powder coated with the lithium salt of the metal acid of Mt according to Examples C1 to C13 and the γ-phase Al₂O₃-coated positive electrode active material powder according to Comparative Example C2 obtained as described above were used to manufacture an electric measurement cell as follows. In the following description, a case in which the positive electrode active material powder coated with the lithium salt of the metal acid of Mt or the γ-phase Al₂O₃-coated positive electrode active material powder was used will be described, and an electric measurement cell in Comparative Examples C1 and C3 was manufactured in the same manner except that the positive electrode active material powder was used instead of the positive electrode active material powder coated with the lithium salt of the metal acid of Mt or the γ-phase Al₂O₃-coated positive electrode active material powder.

First, the positive electrode active material powder coated with the lithium salt of the metal acid of Mt or the γ-phase Al₂O₃-coated positive electrode active material powder was mixed with acetylene black (Denka black, manufactured by Denka Corporation) which was a conductive additive, and then was added with an n-methyl pyrrolidinone solution of 10 mass% of polyvinylidene fluoride (manufactured by Sigma-Aldrich Japan Co., Ltd.) to obtain a slurry. A content ratio of the positive electrode active material powder coated with the lithium salt of the metal acid of Mt or the γ-phase Al₂O₃-coated positive electrode active material powder, acetylene black, and polyvinylidene fluoride in the obtained slurry was 90:5:5 in mass ratio.

Next, the slurry was applied onto an aluminum foil and vacuum-dried to form a positive electrode.

The formed positive electrode was punched into a disc shape having a diameter of 13 mm, Celgard #2400 (manufactured by Asahi Kasei Corporation) as a separator was superposed thereon, an organic electrolytic solution containing LiPF₆ as a solute and ethylene carbonate and diethylene carbonate as a nonaqueous solvent was injected, and a lithium metal foil manufactured by Honjo Metal Co., Ltd., as a negative electrode, was sealed in a CR2032-type coin cell to obtain an electric measurement cell. As the organic electrolytic solution, LBG-96533 manufactured by Kishida Chemical Co., Ltd. was used.

Thereafter, the obtained electric measurement cell was connected to a battery charge and discharge evaluation system HJ1001SD8 manufactured by Hokuto Denko Corporation, and CCCV charge and CC discharge were performed 8 times at 0.2 C, 5 times at 0.5 C, 5 times at 1 C, 5 times at 2 C, 5 times at 3 C, 5 times at 5 C, 5 times at 8 C, 5 times at 10 C, 5 times at 16 C, and 5 times at 0.2 C. After repeating a cycle at the same C rate, the charge and discharge characteristics were evaluated by a method for increasing the C rate. A charge and discharge current at this time was calculated and set based on a mass of the positive electrode active material of each cell as a practical amount of 137 mAh/g for LiCoO₂ and 160 mAh/g for NCM523.

A discharge capacity during discharge at 16 C in the fifth cycle was summarized in Table 3. It can be said that a large value leads to an excellent charge and discharge performance at a high load.

**Table 3**

| | Discharge capacity during discharge at 16 C in fifth cycle [mAh] |
|---|---|
| Example C1 | 128 |
| Example C2 | 118 |
| Example C3 | 125 |
| Example C4 | 129 |
| Example C5 | 110 |
| Example C6 | 115 |
| Example C7 | 78 |
| Example C8 | 82 |
| Example C9 | 95 |
| Example C10 | 98 |
| Example C11 | 127 |
| Example C12 | 123 |
| Example C13 | 101 |
| Comparative Example C1 | 50 |
| Comparative Example C2 | 75 (however, capacity at low load side reduces) |
| Comparative Example C3 | 21 |

As was clear from Table 3, excellent results were obtained in the present disclosure. In contrast, in Comparative Examples, no satisfactory result was obtained. Specifically, in comparison between Examples C1 to C6, C11, and C12 using LiNi_{0.5}Co_{0.2}Mn_{0.3}O₂ particles as the positive electrode active material particles for the lithium ion secondary battery and Comparative Example C3, clearly excellent results were obtained in Examples C1 to C6, C11, and C12 as compared with Comparative Example C3, and in comparison between Examples C7 to C10 and C13 using LiCoO₂ particles as the positive electrode active material particles for the lithium ion secondary battery and Comparative Examples C1 and C2, clearly excellent results were obtained in Examples C7 to C10 and C13 as compared with Comparative Examples C1 and C2.

### 9 Manufacturing 2 of Positive Electrode Powder

### Example D1

The precursor powder obtained as described in Example B1 and LiNi_{0.5}Co_{0.2}Mn_{0.3}O₂ particles as positive electrode active material particles for a lithium ion secondary battery were mixed at a predetermined ratio, charged into an agate bowl, added with hexane until wetting, and thoroughly stirred by using an agate rod until hexane was volatilized and disappeared. This operation was repeated three times.

The obtained mixture was transferred to a crucible made of magnesium oxide covered with a lid, fired at 360°C for 30 minutes while being supplied with dry air at a flow rate of 1 L/min by using an atmosphere control furnace, then fired at 540°C for 1 hour, further fired at 900°C for 3 hours, and cooled to room temperature. Accordingly, a positive electrode active material powder coated with a lithium salt of a metal acid of Mt and containing a large number of constituent particles in which LiNi_{0.5}Co_{0.2}Mn_{0.3}O₂ particles as base particles were coated with a coating layer made of the lithium salt of the metal acid of Mt was obtained.

### Examples D2 to D13

A positive electrode active material powder coated with a lithium salt of a metal acid of Mt was manufactured in the same manner as in Example D1 except that the precursor powders obtained as described in Examples B2 to B13 were used instead of the precursor powder obtained as described in Example B1, those shown in Table 4 were used as positive electrode active material particles for a lithium ion secondary battery, and a thickness of the coating layer was changed by adjusting a mixing ratio between the precursor powder and the positive electrode active material particles for the lithium ion secondary battery.

### Comparative Example D1

In this Comparative Example, without forming a coating layer on LiCoO₂ particles as positive electrode active material particles for a lithium ion secondary battery, an aggregate of the LiCoO₂ particles was used as a positive electrode active material powder. In other words, instead of a positive electrode active material powder coated with a lithium salt of a metal acid of Mt, a positive electrode active material powder not coated with a lithium salt of a metal acid of Mt was used.

### Comparative Example D2

A γ-phase Al₂O₃-coated positive electrode active material powder was manufactured in the same manner as in Example D1 except that a powder of the Al(OH)₃ coprecipitate obtained as described in Comparative Example B1 was used instead of the precursor powder obtained as described in Example B1.

### Comparative Example D3

In this Comparative Example, without forming a coating layer on LiNi_{0.5}Co_{0.2}Mn_{0.3}O₂ particles as positive electrode active material particles for a lithium ion secondary battery, an aggregate of the LiNi_{0.5}Co_{0.2}Mn_{0.3}O₂ particles was used as a positive electrode active material powder. In other words, in this Comparative Example, instead of a positive electrode active material powder coated with a lithium salt of a metal acid of Mt, a positive electrode active material powder not coated with a lithium salt of a metal acid of Mt was used.

In all of the positive electrode active material powders coated with the lithium salt of the metal acid of Mt according to Examples D1 to D13, the positive electrode active material powders according to Comparative Examples D1 and D3, and the γ-phase Al₂O₃-coated active material powder according to Comparative Example D2 obtained as described above, a content of the solvent was 0.1 mass% or less and a content of the oxoanion was 100 ppm or less. In addition, when a reflected electron image was obtained by measurement using a field emission scanning electron microscope with EDS (manufactured by JEOL Ltd.), nothing was observed on a surface of the positive electrode active material powder on which no coating layer was formed.

When the coating layer in the manufacture process of the positive electrode active material powder coated with the lithium salt of the metal acid of Mt according to Examples D1 to D13, that is, the coating layer after the firing treatment at 360°C for 30 minutes and the firing treatment at 540°C for 1 hour and before the firing treatment at 900°C was measured by using TG-DTA at a temperature increase rate of 10°C/min, only one exothermic peak was observed in a range of 300°C or higher and 1000°C or lower. Thus, in Examples D1 to D13, it can be said that the coating layer in the above manufacture process, that is, the coating layer made of a precursor of the lithium salt of the metal acid of Mt was substantially formed in a single crystal phase. In Examples D1 to D13, the coating layer of the constituent particles of the finally obtained positive electrode active material powder coated with the lithium salt of the metal acid of Mt was made of the lithium salt of the metal acid of Mt. Further, in all of Examples D1 to D13, a content of a liquid component contained in a composition in the above manufacture process was 0.1 mass% or less. Furthermore, in all of Examples D1 to D13, a crystal particle diameter of an oxide contained in the coating layer in the above manufacture process was 20 nm or more and 160 nm or less.

Table 4 summarizes configurations of the positive electrode active material powders coated with the lithium salt of the metal acid of Mt according to Examples D1 to D13, the positive electrode active material powders according to Comparative Examples D1 and D3, and the γ-phase Al₂O₃-coated positive electrode active material powder according to Comparative Example D2.

**Table 4**

| | Base particle | | Coating layer | | | T/D |
|---|---|---|---|---|---|---|
| | Composition | Average particle diameter D [µm] | Composition | Crystal phase | Thickness T [nm] | |
| Example D1 | LiNi_{0.5}Co_{0.2}Mn_{0.3}O₂ | 7 | LiNbO₃ | Trigonal LiNbO₃ | 6.1 | 0.0009 |
| Example D2 | LiNi_{0.5}Co_{0.2}Mn_{0.3}O₂ | 7 | LiNbO₃ | Trigonal LiNbO₃ (+ LiNb₃O₈) | 9.5 | 0.0014 |
| Example D3 | LiNi_{0.5}Co_{0.2}Mn_{0.}3O₂ | 7 | LiNbO₃ | Trigonal LiNbO₃ (+ Li₃CO₃) | 7.5 | 0.0011 |
| Example D4 | LiNi_{0.5}Co_{0.2}Mn_{0.3}O₂ | 7 | LiNbO₃ | Trigonal LiNbO₃ | 8.6 | 0.0012 |
| Example D5 | LiNi_{0.5}Co_{0.2}Mn_{0.3}O₂ | 7 | LiSbO₃ | Cubic LiSbOx | 6.6 | 0.0009 |
| Example D6 | LiNi_{0.5}Co_{0.2}Mn_{0.3}O₂ | 7 | LiSbO₃ | Non-crystalline LiSbOx | 5.4 | 0.0008 |
| Example D7 | LiCoO₂ | 5 | LiTaO₃ | Trigonal LiTaOx | 12.5 | 0.0025 |
| Example D8 | LiCoO₂ | 5 | LiTaO₃ | Trigonal LiTaOx | 10.8 | 0.0022 |
| Example D9 | LiCoO₂ | 5 | LiTaO₃ | Trigonal LiTaOx | 9.1 | 0.0018 |
| Example D10 | LiCoO₂ | 5 | LiSbO₃ LiTaO₃ | Cubic LiSbOx + trigonal LiTaOₓ | 10.5 | 0.0021 |
| Example D11 | LiNi_{0.5}Co_{0.2}Mn_{0.3}O₂ | 7 | LiNbO₃ | Trigonal LiNbO₃ | 6.7 | 0.0010 |
| Example D12 | LiNi_{0.5}Co_{0.2}Mn_{0.3}O₂ | 7 | LiSbO₃ | Cubic LiSbOx | 7.4 | 0.0011 |
| Example D13 | LiCoO₂ | 5 | LiTaO₃ | Trigonal LiTaOx | 13.3 | 0.0026 |
| Comparative Example D1 | LiCoO₂ | 5 | - | - | - | - |
| Comparative Example D2 | LiCoO₂ | 5 | Al₂O₃ | γ-phase | 4.9 | 0.0010 |
| Comparative Example D3 | LiNi_{0.5}Co_{0.2}Mn_{0.3}O₂ | 7 | - | - | - | - |

### 10 Evaluation 2 on Positive Electrode Powder

The positive electrode active material powder coated with the lithium salt of the metal acid of Mt according to Examples D1 to D13 and the γ-phase Al₂O₃-coated positive electrode active material powder according to Comparative Example D2 obtained as described above were used to manufacture an electric measurement cell as follows. In the following description, a case in which the positive electrode active material powder coated with the lithium salt of the metal acid of Mt or the γ-phase Al₂O₃-coated positive electrode active material powder was used will be described, and an electric measurement cell in Comparative Examples D1 and D3 was manufactured in the same manner except that the positive electrode active material powder was used instead of the positive electrode active material powder coated with the lithium salt of the metal acid of Mt or the γ-phase Al₂O₃-coated positive electrode active material powder.

First, the positive electrode active material powder coated with the lithium salt of the metal acid of Mt or the γ-phase Al₂O₃-coated positive electrode active material powder was mixed with acetylene black (Denka black, manufactured by Denka Corporation) which was a conductive additive, and then was added with an n-methyl pyrrolidinone solution of 10 mass% of polyvinylidene fluoride (manufactured by Sigma-Aldrich Japan Co., Ltd.) to obtain a slurry. A content ratio of the positive electrode active material powder coated with the lithium salt of the metal acid of Mt or the γ-phase Al₂O₃-coated positive electrode active material powder, acetylene black, and polyvinylidene fluoride in the obtained slurry was 90:5:5 in mass ratio.

Next, the slurry was applied onto an aluminum foil and vacuum-dried to form a positive electrode.

The formed positive electrode was punched into a disc shape having a diameter of 13 mm, Celgard #2400 (manufactured by Asahi Kasei Corporation) as a separator was superposed thereon, an organic electrolytic solution containing LiPF₆ as a solute and ethylene carbonate and diethylene carbonate as a nonaqueous solvent was injected, and a lithium metal foil manufactured by Honjo Metal Co., Ltd., as a negative electrode, was sealed in a CR2032-type coin cell to obtain an electric measurement cell. As the organic electrolytic solution, LBG-96533 manufactured by Kishida Chemical Co., Ltd. was used.

Thereafter, the obtained electric measurement cell was connected to a battery charge and discharge evaluation system HJ1001SD8 manufactured by Hokuto Denko Corporation, and CCCV charge and CC discharge were performed 8 times at 0.2 C, 5 times at 0.5 C, 5 times at 1 C, 5 times at 2 C, 5 times at 3 C, 5 times at 5 C, 5 times at 8 C, 5 times at 10 C, 5 times at 16 C, and 5 times at 0.2 C. After repeating a cycle at the same C rate, the charge and discharge characteristics were evaluated by a method for increasing the C rate. A charge and discharge current at this time was calculated and set based on a mass of the positive electrode active material of each cell as a practical amount of 137 mAh/g for LiCoO₂ and 160 mAh/g for NCM523.

A discharge capacity during discharge at 16 C in the fifth cycle was summarized in Table 5. It can be said that a large value leads to an excellent charge and discharge performance at a high load.

**Table 5**

| | Discharge capacity during discharge at 16 C in fifth cycle [mAh] |
|---|---|
| Example D1 | 119 |
| Example D2 | 115 |
| Example D3 | 116 |
| Example D4 | 122 |
| Example D5 | 103 |
| Example D6 | 116 |
| Example D7 | 76 |
| Example D8 | 88 |
| Example D9 | 98 |
| Example D10 | 94 |
| Example D11 | 123 |
| Example D12 | 120 |
| Example D13 | 105 |
| Comparative Example D1 | 48 |
| Comparative Example D2 | 73 (however, capacity at low load side reduces) |
| Comparative Example D3 | 20 |

As was clear from Table 5, excellent results were obtained in the present disclosure. In contrast, in Comparative Examples, no satisfactory result was obtained. Specifically, in comparison between Examples D1 to D6, D11, and D12 using LiNi_{0.5}Co_{0.2}Mn_{0.3}O₂ particles as the positive electrode active material particles for the lithium ion secondary battery and Comparative Example D3, clearly excellent results were obtained in Examples D1 to D6, D11, and D12 as compared with Comparative Example D3, and in comparison between Examples D7 to D10 and D13 using LiCoO₂ particles as the positive electrode active material particles for the lithium ion secondary battery and Comparative Examples D1 and D2, clearly excellent results were obtained in Examples D7 to D10 and D13 as compared with Comparative Examples D1 and D2.

## Claims

1. A precursor solution comprising:
an organic solvent;
a lithium oxoacid salt that exhibits a solubility in the organic solvent; and
a base metal compound that exhibits a solubility in the organic solvent and that is at least one base metal selected from a group consisting of Nb, Ta, and Sb.

2. The precursor solution according to claim 1, wherein
when a ratio of a content of the base metal to a content of lithium in when a stoichiometric composition of a following composition formula (1) is satisfied is used as a reference, the content of lithium in the precursor solution is 0.90 times or more and 1.20 times or less the reference
LiMtO₃ (1)
(Mt in the formula (1) is at least one selected from the group consisting of Nb, Ta, and Sb).

3. The precursor solution according to claim 1, wherein
the base metal compound is at least one of an oxoacid compound of the base metal, an acetylacetonate of the base metal, and an alkoxide of the base metal.

4. The precursor solution according to claim 3, wherein
an amount of water in the precursor solution is 300 ppm or less.

5. The precursor solution according to claim 1, wherein
the lithium oxoacid salt is lithium nitrate.

6. The precursor solution according to claim 1, wherein
the organic solvent is nonaqueous, and is one or two or more selected from a group consisting of n-butyl alcohol, ethylene glycol monobutyl ether, butyl lactate, ethyl lactate, butylene glycol, hexylene glycol, pentanediol, hexanediol, heptanediol, toluene, ortho-xylene, paraxylene, hexane, heptane, and octane.

7. A precursor powder comprising:
a plurality of precursor particles, which are made of a material containing an inorganic substance that contains Li, at least one base metal selected from a group consisting of Nb, Ta, and Sb, and an oxoacid ion, wherein
an average particle diameter is 500 nm or less.

8. A precursor powder comprising:
a plurality of precursor particles obtained by subjecting the precursor solution according to claim 1 to a heat treatment.

9. The precursor powder according to claim 8, wherein
an average particle diameter is 500 nm or less.

10. An electrode manufacturing method comprising:
an organic solvent removing step of removing the organic solvent by heating the precursor solution according to claim 1;
a molding step of molding a composition containing a plurality of precursor particles obtained in the organic solvent removing step to obtain a molded article; and
a firing step of firing the molded article, wherein
the composition to be subjected to the molding step contains active material particles.

11. The electrode manufacturing method according to claim 10, further comprising:
between the organic solvent removing step and the molding step, an organic substance removing step of removing an organic substance contained in the composition obtained by removing the organic solvent from the precursor solution.

12. The electrode manufacturing method according to claim 10, wherein
the composition to be subjected to the molding step contains the active material particles in addition to the precursor particles.

13. The electrode manufacturing method according to claim 10, wherein
a denseness of the active material particles in the electrode obtained in the firing step is 60% or more.

14. An electrode manufactured by the electrode manufacturing method according to claim 10.
